# EUROPEAN PATENT SPECIFICATION

(11) **EP 4 757 248 B1**
(45) Date of publication and mention of the grant of the patent: **25.11.2026**
(21) Application number: 25163234.5
(22) Date of filing: 12.03.2025
(51) Int. Cl.: H04L 9/40, G06N 3/045, G06N 3/044, G06N 3/047, G06N 3/08, G06N 3/084, G06N 3/088

(54) **PACKET DATA CLASSIFICATION**
DATENPAKETKLASSIFIZIERUNG
CLASSIFICATION DE DONNÉES PAR PAQUETS

(30) Priority: 06.12.2024 US 202463729297 P
(43) Date of publication of application: 10.06.2026
(73) Proprietor: FUJITSU LIMITED, Kawasaki-shi, Kanagawa 211-8588 (JP)
(72) Inventor: LAVI, Ortal, SL1 2BE Slough (GB); MANOR, Ofir, SL1 2BE Slough (GB); SCHWARTZ, Tomer, SL1 2BE Slough (GB); MURILLO, Andres, SL1 2BE Slough (GB); OTUNG, Andikan, SL1 2BE Slough (GB); SUGA, Junichi, SL1 2BE Slough (GB)
(74) Representative: Haseltine Lake Kempner LLP

(56) References cited:
- LAVI ORTAL ET AL: "Fine-Tuning Large Language Models for Network Traffic Analysis in Cyber Security", 2024 IEEE CONFERENCE ON DEPENDABLE AND SECURE COMPUTING (DSC), IEEE, 6 November 2024 (2024-11-06), pages 45 - 50, XP034761346, DOI: 10.1109/DSC63325.2024.00019
- HAMZA KHEDDAR: "Transformers and Large Language Models for Efficient Intrusion Detection Systems: A Comprehensive Survey", ARXIV.ORG, CORNELL UNIVERSITY LIBRARY, 201 OLIN LIBRARY CORNELL UNIVERSITY ITHACA, NY 14853, 14 August 2024 (2024-08-14), XP091851005
- MANOR OFIR ET AL: "Retrieval of Network Packets Information Using a Generated Latent Space Representation for Network Analysis in Cyber Security", 2024 ANNUAL COMPUTER SECURITY APPLICATIONS CONFERENCE WORKSHOPS (ACSAC WORKSHOPS), IEEE, 9 December 2024 (2024-12-09), pages 224 - 231, XP034864125, DOI: 10.1109/ACSACW65225.2024.00032

## Description

The present invention relates to packet data classification and more particularly to a computer-implemented method, a computer program, and an information programming apparatus.

The world of cybersecurity is becoming larger and more complicated with each passing year. Both state and non-state actors attack and compromise organizations, infrastructure, elections, etc. While many tools exist to defend against incoming attacks, they currently do so by either creating a set of rules on network communication, or detecting anomalous network communications and sending them for further investigation. The former works as more basic "if... then..." statements that go over large records of transmission data and highlight anomalous behaviours. The latter utilizes some form of DL (deep learning) algorithms (mostly variations on autoencoder (AE) or recurrent neural network (RNN)) to classify network transmissions into two categories, normal and anomalous.

The advent of large language models (LLMs) has also shown a large potential in many spheres. These models have shown great ability in understanding and writing natural language texts. They have shown capabilities in question answering (such as historical and scientific inquiries), filling in blanks in text, generating new content based on user requests (such as suggesting store names, writing short narratives, and creating social media posts), summarizing text, and generating code.

Such LLMs are first pre-trained on an especially large corpus of data which includes texts from the internet (e.g. Wikipedia, Reddit) and public domain books. After the pretraining stage is done, they can be fine-tuned to solve specific tasks or used as a general Chat Bot.

The power these models (LLMs) have makes them attractive for both personal and enterprise uses. Several industry leaders have claimed that these LLMs will improve productivity and some research has shown that this is the case when it comes into code.

One of the large downsides to LLMs is that they are primarily useful for natural text tasks. Some work has and is being done into incorporating image generation and analysis capabilities into LLMs but very little is being done to have them understand and analyze non-textual data, specifically network transmissions.

The limits of these models have been tackled in three ways.
- Prompt engineering is the process of structuring the instructions given to an LLM to achieve the desired result. This can be an expensive and time-consuming process as the length of the prompt is correlated to the cost taken by LLM providers and the time an LLM takes to process and return a result.
- Fine-tuning is the process of providing a model with prompt-response pairs that are similar to the information the user wishes to achieve from the model. These have shown promise, but by their nature **they** are also limited, and any time more data is available the model would need to be re-fine-tuned.
- RAG (Retrieval Augmented Generation) is a method that creates and maintains a database of the required data, then upon receiving a prompt from the user, it retrieves the most relevant data for the prompt from the database and creates a new prompt for the LLM that uses that retrieved data.

All three existing solutions remain dependent on using human-readable textual data which in its nature excludes technical structured (or semi-structured) data, for example network transmissions in the form of Packet Captures (PCAP).

LAVI ORTAL ET AL, XP034761346, "Fine-Tuning Large Language Models for Network Traffic Analysis in Cyber Security", discloses a procedure to fine-tune an LLM model to enable it to use directly network packets as input for the task of cyber security anomalies classification.

In light of the above, a method for packet data classification is desired.

According to an embodiment of a first aspect there is disclosed herein a computer-implemented method comprising: generating, based on input network packet data, a target flow summary comprising information (in a semi-structured data format) relating to (a target) packet flow between two/a pair of (network) addresses/entities during a target time period; generating, (using an encoder and) based on the target flow summary, a target latent space representation corresponding to the target flow summary; identifying, from among a plurality of reference latent space representations, k reference latent space representations most similar to the target latent space representation, wherein the plurality of reference latent space representations correspond to a plurality of reference flow summaries (based on reference network packet data) and to a plurality of classifications, wherein k is an integer greater than 1; generating, using a first large language model, LLM, and based on the target flow summary, a target flow report/portrait in natural language format and generating, using the first LLM and based (respectively) on (the) k reference flow summaries corresponding respectively to the identified k reference latent space representations, k reference flow reports/portraits in natural language format (corresponding respectively to the k reference flow summaries); generating, using a second LLM and based on the target flow report/portrait and the k reference flow reports/portraits with their corresponding classifications, a classification of the (target) packet flow as malicious or benign (wherein the second LLM has been fine-tuned/trained based on training flow reports/portraits to classify the training flow descriptions as malicious or benign).

Reference will now be made, by way of example, to the accompanying drawings, in which:
Figure 1 is a diagram useful for understanding the invention;
Figure 2 is a diagram useful for understanding the invention;
Figure 3 is a diagram useful for understanding the invention;
Figure 4 is a diagram useful for understanding the invention;
Figure 5 is a diagram outlining a stage;
Figure 6 is a diagram outlining a stage;
Figure 7 is a flowchart outlining a stage;
Figure 8 is a flowchart outlining a stage;
Figure 9 is a flowchart outlining a stage;
Figure 10 is a flowchart outlining a stage;
Figure 11 is a flowchart outlining a stage;
Figure 12 is a flowchart outlining a stage;
Figure 13 is a flowchart illustrating a method;
Figure 14 is a diagram illustrating low summaries;
Figure 15 is a diagram illustrating numerical vectors;
Figure 16 is a diagram illustrating embeddings;
Figure 17 is a diagram illustrating an apparatus;
Figure 18 is a table;
Figure 19 shows graphs;
Figure 20 shows graphs;
Figure 21 shows graphs; and
Figure 22 shows matrices.

### Brief Description of Technical Terms Used:

- Anomaly Detection - The process of identification of patterns or behaviors in a system that deviate from what is usual, standard, or expected, making them inconsistent with the rest of a data set.
- Anomaly Classification - The categorization process of anomalies into known classes. This helps in understanding the type of threat and the type of response to be made.
- Root Cause Analysis (RCA) - a method of problem solving used for identifying the root causes behind security events. The purpose is to determine what caused the security incident so that preventive measures in the future.
- Generative Al - Artificial intelligence systems capable of generating text, images, videos, or other data using generative models. These models learn the patterns and structure of their input training data and then generate new data that has similar characteristics.
- Large Language Models (LLMs) - Al models notable for their ability to achieve general-purpose language generation and other natural language processing tasks such as translation, summarization, and question-answering.
- Fine Tuning - the process of taking a pre trained Al model and further training it on a smaller, targeted dataset. This is done to adjust the model's performance to a specific task or domain rather than starting the training process from scratch.
- Network Traffic - The flow of data packets moving across a network at a given point in time.
- PCAP files - A common format for storing packet captures. A PCAP file includes an exact copy of every byte of every packet as seen on the network.
- Retrieval Augmented Generation (RAG) - A technique for enhancing the accuracy and reliability of generative Al models with facts fetched from external sources.
- Latent Space - an embedding of a set of items withing a manifold in which items resembling each other are positioned closer to one another.
- Autoencoder - An artificial neural network used to learn efficient coding of unlabeled data. It includes two portions, the encoder which transforms the input data in lower dimensionally representation, and decoder, which recreates the input data from the encoded representation.

Anomaly detection and Root Cause Analysis (RCA) in cybersecurity are typically performed manually by experts. There is limited access to human experts in this field, and the analysis work is often very tedious, highlighting the need to automate these processes. Additionally, there is a demand for detailed explanations of security incidents, along with the identification of these incidents.

While traditional Machine Learning algorithms have been utilized for over a decade in anomaly classification of network data (e.g. Shon, Taeshik, and Jongsub Moon. "A hybrid machine learning approach to network anomaly detection." Information Sciences 177.18 (2007): 3799-3821 and Sommer, Robin, and Vern Paxson. "Outside the closed world: On using machine learning for network intrusion detection." 2010 IEEE symposium on security and privacy. IEEE, 2010) the adoption of Generative Al and LLMs is relatively recent, with limited peer-reviewed works addressing this topic. This is due to the fact that though LLMs exhibit remarkable capabilities in understanding and processing human language, they often encounter challenges when applied to technical text (Yang, Jingfeng, et al. "Harnessing the power of Ilms in practice: A survey on chatgpt and beyond." ACM Transactions on Knowledge Discovery from Data 18.6 (2024): 1-32), particularly in the context of network data intended for machine comprehension rather than human consumption.

In the field of cybersecurity, various methodologies are employed, with prompt engineering appearing among them. For instance, the authors of "Lanobert" (Lee, Yukyung, Jina Kim, and Pilsung Kang. "Lanobert: System log anomaly detection based on bert masked language model." Applied Soft Computing 146 (2023): 110689) fine-tuned an LLM by training it on benign network logs. This ensured the model's ability to accurately predict the next tokens, i.e. the logs, for benign scenarios, while intentionally causing it to fail in predicting anomalous tokens. This approach enables the system to effectively detect anomalies by leveraging the model's different performance in predicting benign versus anomalous log sequences. In (Balasubramanian, Prasasthy, Justin Seby, and Panos Kostakos. "Transformer-based LLMs in Cybersecurity: An in-depth Study on Log Anomaly Detection and Conversational Defense Mechanisms." 2023 IEEE International Conference on Big Data (BigData). IEEE, 2023.), the authors integrated a fine-tuned LLM with rule-based detection logic for the purpose of detecting anomalies in network log files.

There exist no works using network traffic (PCAP files) directly with LLMs.

As disclosed herein, a fine-tuned LLM serves as a classifier, while an embedding mechanism, database and retrieval mechanisms serve as support functions to the LLM. This disclosure demonstrates their capability not only to detect anomalous patterns within a network but also to classify the type of attack by training the LLM on various attack scenarios. Additionally, LLMs are used to provide meaningful explanations of the network events.

A goal of the disclosure is to create a new and more robust cybersecurity tool which leverages the strength of LLMs along with the ubiquity and informational value of network packets. In a particular implementation this framework comprises two main stages.

The first is a database that will include network communications along with human-readable textual context. This stage will also include a function to embed these network communications along with their context, and to retrieve communications stored in the database by comparing them to other network communications.

The second uses fine-tuned LLMs along with other out-of-the-box LLMs to analyze some unknown network communication by leveraging the power of LLMs and the context of similar communications. This analysis will conclude if the queried communication is part of some malicious attack, conduct Root Cause Analysis (RCA) and recommend ways to defend from future attacks of the sort.

Both stages assist in solving LLMs' weakness with technical and non-textual data. The first converts the non-textual data into a more human-readable format along with storing it in such a way that it becomes useful for analyzing new and unseen data. The second prepares an LLM to accept the network communication data so provide more robust analysis, especially in the field of cybersecurity.

Implementations disclosed herein provide a plethora of capabilities and can act as part of an assistant to enhance the detection, analysis, explanation, mitigation and prevention of attacks in a more efficient and less labor-intensive manner. These capabilities include mechanisms to represent, store, and retrieve network traffic in a way that will be useful to LLMs, and the training and directing of LLMs to more accurately and thoroughly assist in cybersecurity tasks entailing network communications.

Implementations disclosed herein ultimately provide robust cybersecurity analysis of network communication data e.g. in the form of internet packets (PCAP) that includes classification of several different attacks. This is achieved by leveraging the analytical capabilities of LLMs and overcoming their shortcomings by:
- creating a RAG-like system that provides human-readable context to unknown internet packets,
- and fine-tuning the LLM to accept human-readable and contextualized conversions of network communication data to reply with the classification of the data (as in whether it represents part of an attack and if yes, then which attack).

This solves the problems mentioned herein with attempting to use LLMs for cybersecurity purposes.

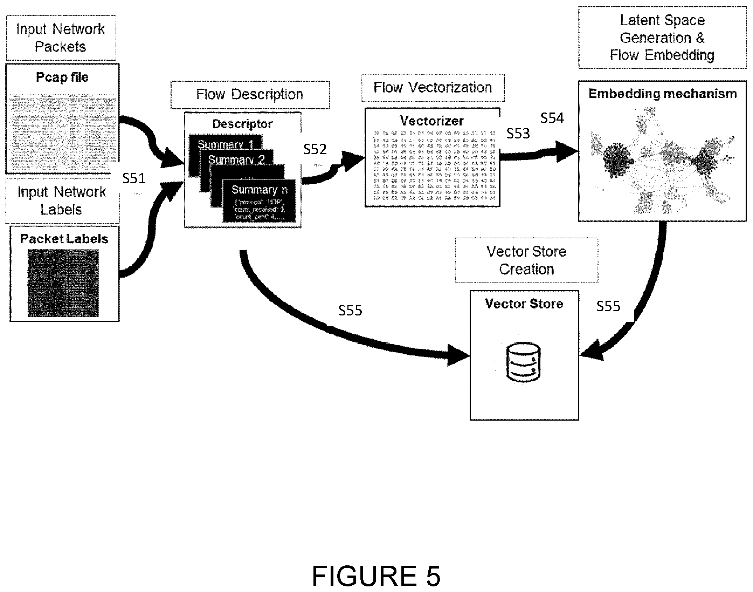

A particular implementation with reference to Figures 5-12 is described below.

This implementation uses a pre-existing labeled network traffic dataset which is taken and split into small chunks defined as five second intervals of network packet flows. Two things are done with this:
- The flows are converted into a more human-readable format by an LLM based on the tabular format extracted. With their label (benign, or malicious by a specific attack) they are then assembled into a full query-response tuple that is used to fine-tune the LLM.
- Features are extracted from these chunks which are then converted into a numerical vector. These numerical vectors serve as the training data of an autoencoder whose trained encoding function converts the numerical vector representations into latent space representations. These latent space representations are saved along with data extrapolated from their labels in a vector store.

When a new piece of network traffic is to be classified and analyzed it also gets converted into the latent space representation, then the closest similar chunks are fetched from the vector store along with their extrapolated data. The queried pieces of network traffic along with the retrieved pieces are then converted to a human-readable format through an LLM. Those are then combined to create the information portion and question portion of the prompt. And this new prompt is then passed through the fine-tuned LLM to receive the classification.

This implementation improves upon classical anomaly classification and RCA approaches because it allows the usage of LLMs while overcoming their shortfalls in token-limits, readability, and the rigidity of the types of data used for their pretraining sets.

The description of this implementation is divided into 12 mechanisms and 3 stages. All stages share some mechanisms. In order to describe this fully and accurately, this will first go over the mechanisms and then explain how the different stages utilize them.

### Mechanisms:

1. Flow Description
2. Flow Vectorization
3. Latent Space Generation
4. Vector Store Creation
5. Flow Embedding
6. Flow Textualization
7. Fine-Tuning the LLM
8. K-closest Flow Retrieval
9. Prompt Generation
10. Single-Stage Classification
11. Multi-Stage Classification
12. Report Generation

### Stages:

A. Database Initialization
B. Fine-Tuning
C. Network Transmission Diagnosis

### Mechanisms

The 'mechanisms' and/or the 'stages' described herein may be considered modules which execute particular operations/steps. It will be appreciated that a given mechanism may be used in different way in different stages - for instance, the flow description mechanism deals with a label (classification) for each packet flow in the A. Database initialisation stage but not in the C. network transmission diagnosis stage.

### Flow Description:

The initial input of the implementation and this specific mechanism is a PCAP file and possibly a label file. The PCAP file contains the packets that have passed through a certain network element, preferably a router, in an organized and readable format. The label file contains some information about the packets, specifically if they are related to a certain network attack. This mechanism goes over the PCAP file and groups the packets into flows. The flows may be defined in e.g. two ways. If the packets are sent through the TCP protocol, then a flow may be defined as a TCP connections (as described in RFC 793). Otherwise, if the packets are sent though UDP (User Datagram Protocol), the flow is described as all packets that share the 4-tuple: *source ip, destination ip, source port, destination port,* i.e.: all packets having the same source IP, destination IP, source port, and destination port are grouped together in a flow. These flows are defined as bi-directional flows where the source is defined as the transmission instigator (host or sender) and the destination is defined as the transmission receiver (or server). The flows may be grouped in e.g. two different ways. One option is to use all packets in a single PCAP file to define a flow. Another option is to use (e.g. 5 second) intervals of the packets in the file to describe a flow. In the latter, more flows are defined. After each flow is defined a set of features is extracted from it and stored in a JSON file. The features are as follows:
- Directly extracted features: Transmission Protocol, Source IP, Destination IP, Source Port, Destination Port, Start Time, End Time, Application, Service Name, Source Host Name, Destination Host Name, Internal Source (boolean), Internal Destination (boolean), Initial Sequence Number (TCP only), Final **Sequence** Number (TCP only), Initial Acknowledgement Number (TCP only), Final Acknowledgement Number (TCP only).
- Statistical features:
   ∘ For data sent: Number of packets, Amount of data (in bits), Mean size of a packet (in bits), Standard deviation of a size of a packet (in bits)
   ∘ For data received: Number of packets, Amount of data (in bits), Mean size of a packet (in bits), Standard deviation of a size of a packet (in bits)
   ∘ Total time the flow occurred.

If a label file is also included then the labels are also stored in the JSON file. In general, each packet may have a label (classification) corresponding to a particular attack and the vector inherits the attack present in any packets it is based on.

To summarize, the final output of this section is a JSON file which is a list of all the flows, and each flow is a dictionary containing the features explained above.

After that is done a second JSON file is created. This one is similar to the original but some features are changes or removed to make the flows generic, as in not specified to specific ip addresses or times. The source and destination ip along with the start and end times are dropped. Also host names are changed to become a generic *host_i.*

The output of this mechanism, for a given packet flow, may be referred to as a flow summary.

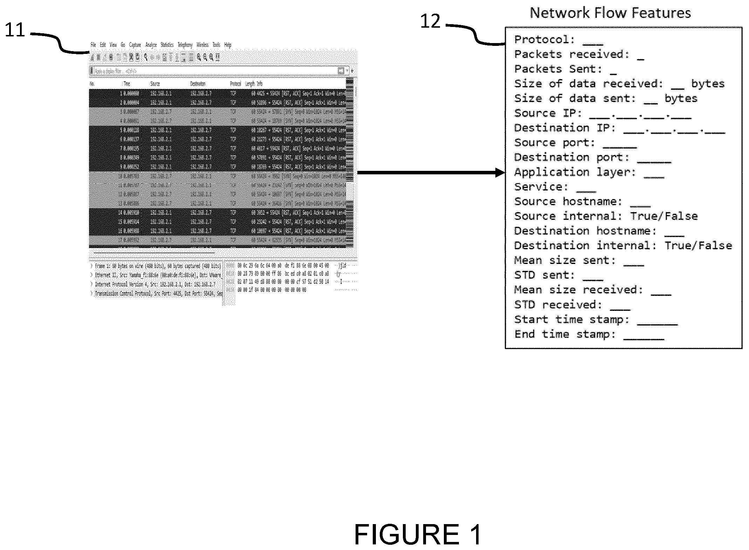

Figure 1 is a diagram illustrating an example of generating a flow summary 12 ('network flow features') based on PCAP data 11.

### Flow Vectorization:

This mechanism takes the JSON file compiled by the Flow Descriptor and turns each flow into a numerical vector. This is done using know transformation algorithms on the different features of the flows.
- Categorical features: These are transmission protocol, application layer, source ip, destination ip, completion of sent data, completion of received data, and the division of destination port into 7 categories based on the ubiquity of their use. These features are transformed using one-hot encoding.
- Numerical features: These are number of packets received and sent, amount of data received and sent, length of the flow in nanoseconds, mean size of the packets received and sent, and the standard deviation of the size of the packets received and sent. These are normalized, e.g. min-max scaled using either a [0,1] scale or a [-1,1] scale.
- High variance features: this includes only the destination port. This first undergoes logarithmic scaling and then undergoes min-max scaling like the numerical features.
- The rest of the non-label features may be dropped as they may be considered irrelevant to understanding the function of a flow.

After the transformation is complete two files are created. The first is a csv file containing the new vectors. The seconds is another csv file including further vectors where in the case of each further vector 5 vectors are aggregated using the mean of the values of their features. This is done in a sliding window e.g. with the size 5 and the step of 2. Each further vector inherits the attack classification of its five original vectors. For instance, if one vector among the five corresponds to an active wiretap attach then the further vector is associated with the active wiretap attack (if another of the five original vectors relates to a different attack, whichever is first in the order of the vectors (ID/serial numbers) is determines the attack that the further vector inherits).

### Latent Space Generation:

In this mechanism, the numerical vectors are passed through an AutoEncoder to train it. The loss function is the reconstruction loss of the numerical vectors.

After the AutoEncoder has been trained on the numerical vectors, in the flow embedding mechanism they are all put through the encoding portion of the AutoEncoder to create embeddings of the flows. The AutoEncoder weights are preserved. Such embeddings for the vector store may be referred to as reference latent space representations.

### Vector Store Creation:

The search and retrieval mechanism that will be used is based on vector stores. These structures allow for a quicker search of vectors based on distance from a queried vector. Each datapoint stored in the vector store includes the following:
- An embedding
- A document
- An ID
- Metadata

The vector store used in this implementation works as follows: For each flow defined and described in the Flow Descriptor a datapoint is stored in the vector store. The embedding is the embedding generated in the Latent Space Generation mechanism. The "document" is the representation of the flow as can be found in the JSON file outputted by the Flow Descriptor. The ID is the position (can be thought of as serial number) of the flow. And the metadata is data e.g. present in a label, for example all data that can be extracted from the label of the flow. In this implementation the metadata includes at least a classification, e.g. the attack.

In general, the vector store may be implemented using any suitable storage technique. For instance, storage as datapoints comprising the fields noted above is not essential so long as the relevant information may be retrieved for a given reference latent space representation.

Network packet data may be used that is from the same or a similar or a different/unrelated system/network to the system/network from which the 'unknown flow' or 'target packet flow' is taken.

### Flow Embedding:

This mechanism takes numerically vectorized flows and uses the encoder portion of the (trained) AutoEncoder to create an embedding of the flow. Such an embedding may be referred to as a latent space representation. For generating the vector store, such embeddings may be referred to as reference embeddings or reference latent space representations and are based on reference PCAP data. For an "unknown flow", which may be referred to as a target packet flow based on target PCAP data, the embedding may be referred to as a target embedding or a target latent space representation.

### Flow Textualization:

In this mechanism, the output of the Flow Description mechanism is passed through an LLM (e.g. a first LLM) to create a more human-readable format. The output is a paragraph that mirrors the data in the flow summary (e.g. the tabular format) but allows the model to effectively analyze and classify the unknown network flow. This output may be referred to as a (reference/target) flow report and is in a natural language format.

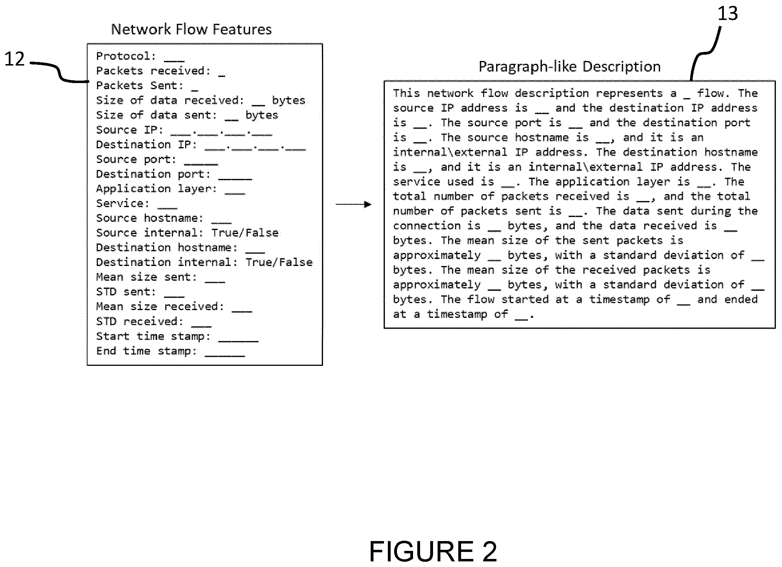

Figure 2 is a diagram illustrating an example of generating a flow report 13 based on a flow summary 12.

### Fine-Tuning the LLM:

In order to fine tune the relevant LLM (e.g. the second LLM, and optionally the third and at least one further LLMs, described later) the LLM is provided with examples that include three parts: system message, query, and answers. The system message is similar to the one that follows:
*You are an assistant that detects malicious network flow descriptions and classifies them based on the k closest known flows. Given a network flow description your goal is to determine whether it is benign or malicious, if it is malicious, classify the attack, based on the given k closest flows.*

It will be appreciated that some variations will be made for the multi-stage classification fine-tuned LLMs (described below) such as requesting only to classify between malicious and benign, what category of attacks the query is from, or which attack in that category the flows best represent.

The k mentioned is number of closest flows to be used in the Network Transmission Diagnosis stage (described below). The query includes a training "unknown flow" along with k "closest flows" that simulate the prompt that will be given to the fine-tuned LLM during the actual network transmission diagnosis stage. Each "closest flow" comprises the human-readable textualization of the flow as given from the Flow Textualization and its classification as was determined in the Flow Description processes (extracted from the label file, for example). The training "unknown flow" is also provided in the format of a human-readable textualization generated by the LLM concerned. Each training "unknown flow" is associated with a classification of the flow (as ground truth data). Weights of the LLM are adjusted based on the prediction by the LLM to finetune the LLM.

### K-Closest Retrieval:

The vector store created in the Vector Store Creation mechanism, has the capability of finding and returning any number of stored datapoints (or this may be considered a separate mechanism that uses the vector store). The datapoints returned are those whose embeddings are closest (e.g. in a geometric sense in the latent space) from a queried embedding. The two functions this implementation uses to measure the distance between embeddings are L2 and Cosine similarity. The datapoints returned are returned with all the features included in them (or at least the reference latent space representations are returned and the associated other information such as classification is retrieved from the vector store or elsewhere).

### Prompt Generation:

This mechanism receives the queried flow's, along with the retrieve k-closest flows', human-readable textualizations from the Flow Textualization mechanism, and for the latter it also receives their classes/classifications. The prompt looks as the following:
***["Queried Flow Textualization"***
*The **k** closest flows are:*
   *1: **"1^{st} Closest Flow Classification": "1^{st} Closest Flow Textualization"***
   ***k**:**"kht Closest Flow Classification": "kht Closest Flow Textualization"]***

As the intended LLM has been fine tuned to recognize such prompts and return the classification of the queried flow, this is enough of a prompt.

### Single-Stage Classification:

The prompt created in the Prompt Generation mechanism is used in the fine-tuned LLM (second LLM) and the returned answer is either "benign" or "malicious" along with the specific attack detected.

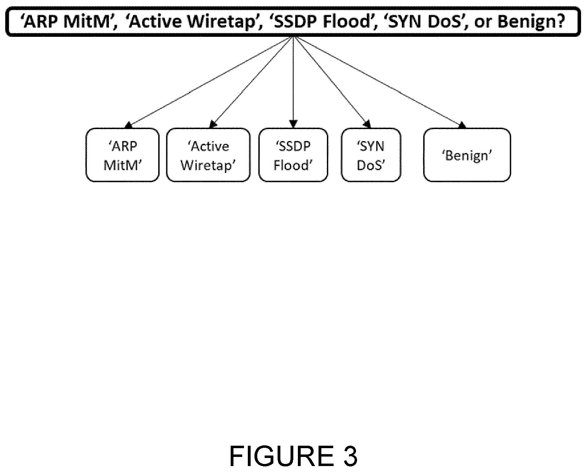

Figure 3 is a diagram illustrating a single-stage classification implementation in which a packet flow is classified as one of a plurality of attacks (Address Resolution Protocol Man in the Middle (ARP MitM), active wiretap, Simple Service Discovery Protocol (SSDP), and SYN denial of service (DoS) or benign.

### Multi-Stage Classification:

This stage (as an alternative to single-stage classification) includes 5 different fine-tuned models (LLMs) each with a different system message to achieve a different goal. These models are:
- One model classifies the queried flows into 'benign' and 'malicious'
- One model classifies 'malicious' queried flows into several attack categories such as: Denial of Service (DoS) attacks, Man in the Middle (MitM) attacks, and reconnaissance attacks.
- Three models that take 'malicious' queried flows that have been classified for a specific category and then classify them into a specific attack.

The prompt generated from the Prompt Generation mechanism is inputted into these models in the order of classification that they follow:
1. Model that classifies between 'benign' and 'malicious'
2. Model that classifies into attack categories
3. The specific Model that classifies the query into attacks in the defined category

In general, having five LLMs is not essential, and other implementations may have more generally second, third, and at least one further LLMs, as described later.

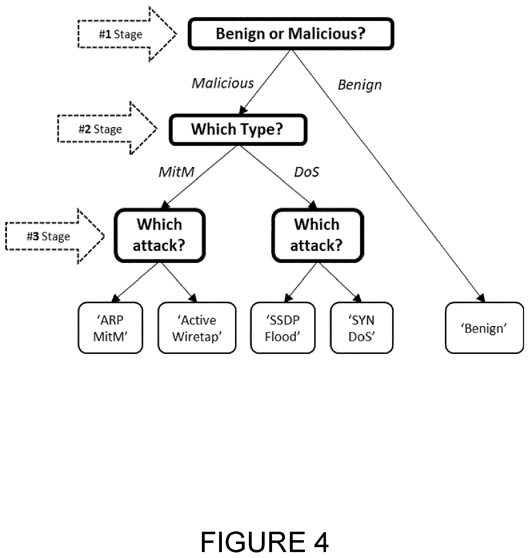

Figure 4 is a diagram illustrating an implementation of multi-stage classification in which a packet flow is classified as benign or malicious in a first stage (by the second LLM), and then if malicious, classified as corresponding to one of a plurality of attacks (here including main in the middle (MitM) and denial of service (DoS)) (by the third LLM described later) and in a third stage classified as corresponding to one of a plurality of attacks depending on the determined attack type (ARP MitM or active wiretap for MitM attack type and SSDP flood or SYN DoS for DoS attack type) (by the at least one further LLM described later).

### Report Generation:

The answer from one of the classification mechanisms (Single-Stage or Multi-Stage) is fed into an LLM (sixth LLM, may be referred to as an "analysis report LLM") along with the human-readable textualization of the flows to create a full report that explains the attack, its origin and steps, mitigation efforts and prevention efforts that can be introduced into the network. The full report in this sense may be referred to as an analysis report, and is distinct from the 'flow report' generated in the flow textualization mechanism.

### Stages

### Database Initialization:

This stage takes labeled network data and creates the mechanism that will later be used to generate the reports analyzing network data. The stage is outlined in Figure 5, comprising steps S51-S55.

The pipeline is as follows:
S51. PCAP files and label files representing labeled network data are inserted into and processed according to the Flow Description mechanism.
S52. The generic flow features output is then inserted into and processed according to the Flow Vectorization mechanism.
S53. The outputted vectors are then used to train the AutoEncoder in the Latent Space Generation mechanism.
S54. The same vectors (or other vectors generated based on other PCAP files) are then passed through the encoding portion of the AutoEncoder in the Flow Embedding mechanism.
S55. The embeddings generated are used to create the vector store in the Vector Store Creation mechanism (together with the flow summaries).

### Fine-Tuning:

This stage takes labeled network data and fine-tunes all the fine-tuned LLMs to be used in the Network Transmission Diagnosis stage.

The pipeline is as follows:
1. PCAP files and label files representing labeled network data are inserted into the Flow Description mechanism.
2. The generic labeled flows are then converted into human-readable paragraph-like texts in the Flow Textualization mechanism.
3. Each of the six fine-tuned LLMs (one for Single-Stage Classification, five for Multi-Stage Classification) are fine-tuned using the human-readable flows as specified the Fine-Tuning the LLMs mechanism. Alternatively, just the single-stage classification LLM or the five multi-stage classification LLMs are finetuned.

The above two stages may be considered a single stage, for example a "preliminary" stage.

### Network Transmission Diagnosis:

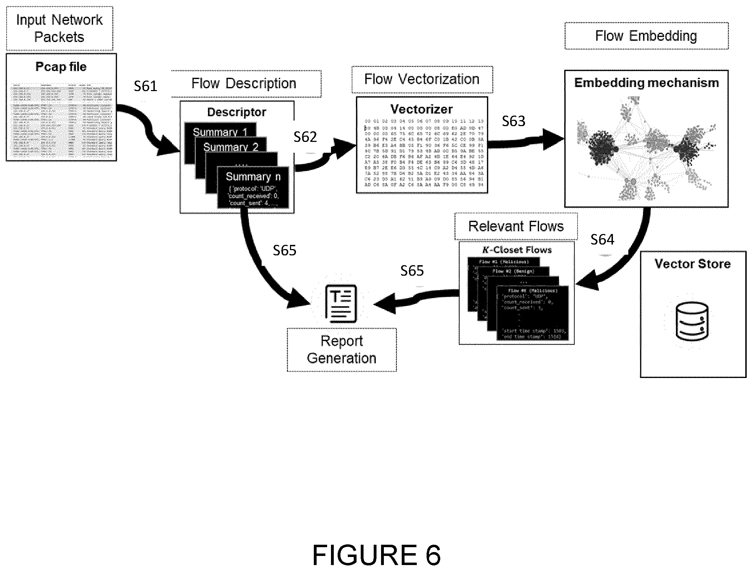

The stage takes unlabeled network transmission data and analyses it to find if it is benign or malicious and if the latter to provide assistance in mitigating it. The stage is outlined in Figure 6, comprising steps S61-S65.

The pipeline is as follows:
S61. PCAP files are inputted into and processed according to the **Flow Descriptor** mechanism.
S62. The generic flow features output is then inserted into and processed according to the **Flow Vectorization** mechanism.
S63. The outputted vectors are then passed through the encoding portion of the AutoEncoder in the **Flow Embedding** mechanism.
S64. Each of the embeddings are passed to the vector store to retrieve the respective closest datapoints in the **K-Closest Retrieval** mechanism.
S65. The non-generic flow summaries are paired with the retrieved datapoints to construct the prompt in the **Prompt Generation** mechanism. The created prompt is then inserted into the **Single-Stage Classification** mechanism or the **Multi-Stage Classification** mechanism to generate the classifications of the inputted flows. The **Report Generation** mechanism is used to create a final and robust analysis report on the attack.

The Network Transmission Diagnosis stage may further comprise taking some action based on a malicious (or specific attack) classification, for example instructing at least one entity associated with the packet flow to limit communication. Additionally or alternatively, the analysis report may be sent to the at least one entity and/or to a network administrator.

In the above implementation, a target PCAP file gives rise to multiple target packet flow and thus multiple target latent space embeddings - the 'multiple' here is not essential and just one target packet flow may be considered and ultimately classified.

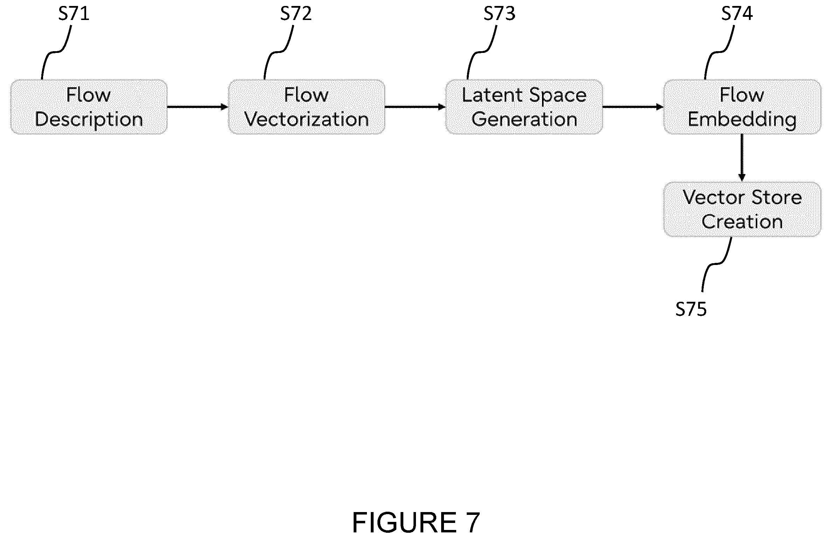

Figure 7 is a flowchart comprising steps S71-S75 and representing the database initialization stage. Figure 7 shows the stage in terms of the so-called mechanisms used. Step S71 comprises using the 1. Flow description mechanism; step S72 the 2. Flow vectorization mechanism; step S73 the 3. latent space generation mechanism; step S74 the 5. flow embedding mechanism; and step S75 the 4. vector store creation mechanism, and the above description of the stage and the relevant mechanisms is applicable here.

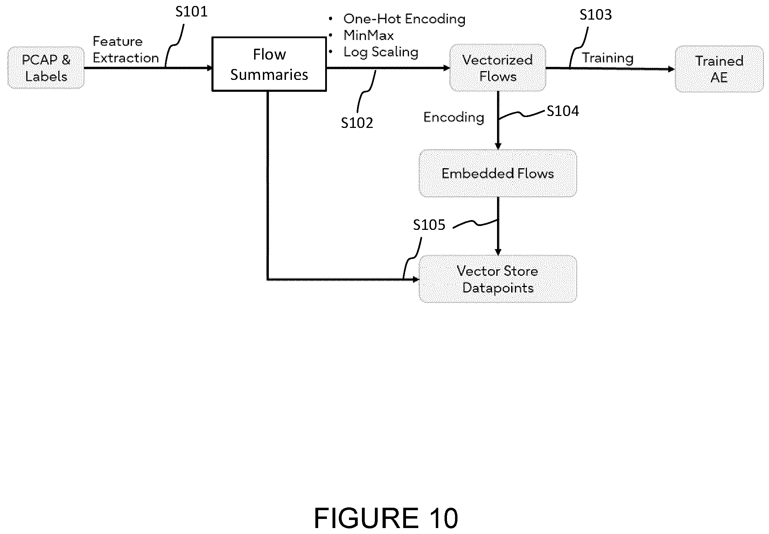

Figure 10 is a further flowchart representing the database initialization stage and comprises steps S101-S105, and shows at step S101 PCAP and labels being received and undergoing feature extraction to generate flow summaries in accordance with the 1. flow description mechanism; at step S102 the creation of vectorized flows in accordance with the 2. flow vectorization mechanism; at step S103 training of the AE according to the 3. latent space generation mechanism; at step S104 encoding to generate embedded flows according to the 5. flow embedding mechanism; and at step S105 storage of the flow summaries and embedded flows as vector store datapoints according to the 4. vector store creation mechanism.

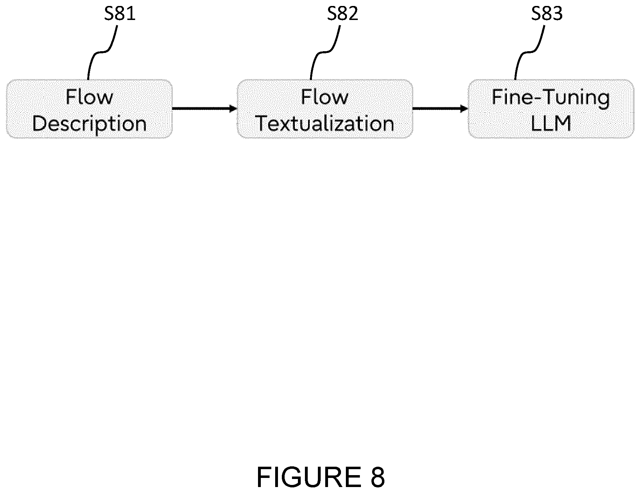

Figure 8 is a flowchart comprising steps S81-S83 and representing the LLM finetuning stage. Figure 8 shows the stage in terms of the so-called mechanisms used. Step S81 comprises using the 1. flow description mechanism; step S82 the 6. flow textualization mechanism; and step S83 the 7. fine-tuning the LLM(s) mechanism.

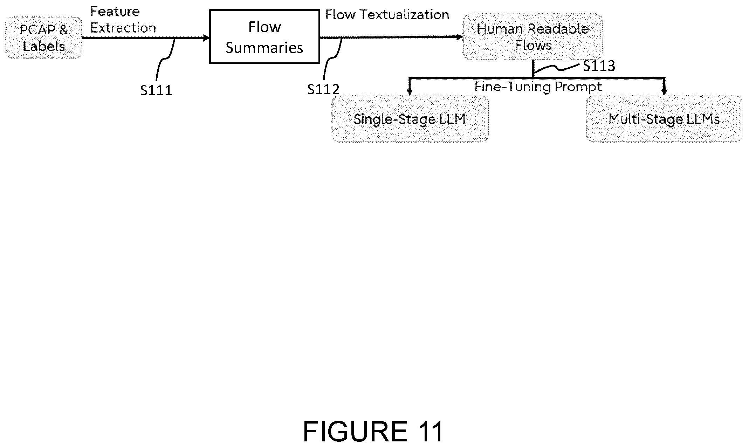

Figure 11 is a further flowchart representing the LLM finetuning stage and comprising steps S11-S113, and shows at step S111 PCAP and labels being received and flow summaries being generated thereon in accordance with the 1. flow description mechanism; at step S112 generation of flow reports (human readable flows) according to 6. flow textualization; and at step S113 single-stage and/or multi-stage classification fine-tuning according to 7. fine-tuning the LLM (and in line with 11. multi-stage classification and 10. single-stage classification).

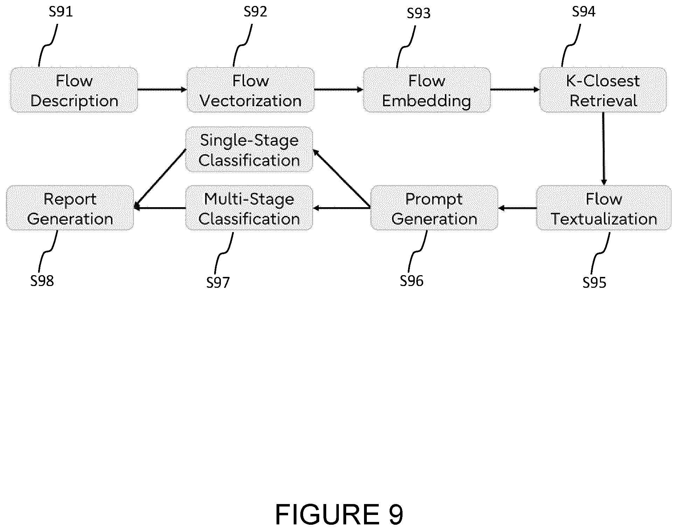

Figure 9 is a flowchart comprising steps S91-S98 and representing the network transmission diagnosis stage. Figure 9 shows the stage in terms of the so-called mechanisms used. Step S91 comprising using the 1. flow description mechanism; step S92 the 2 flow vectorization mechanism; step S93 the 5. flow embedding mechanism; step S94 the 8. k-closest retrieval mechanism; step S95 the 6. flow textualization mechanism; step S96 the 9. prompt generation mechanism; step S97 the 10/11. single/multi-stage classification mechanism; and step S98 the 12. report generation mechanism.

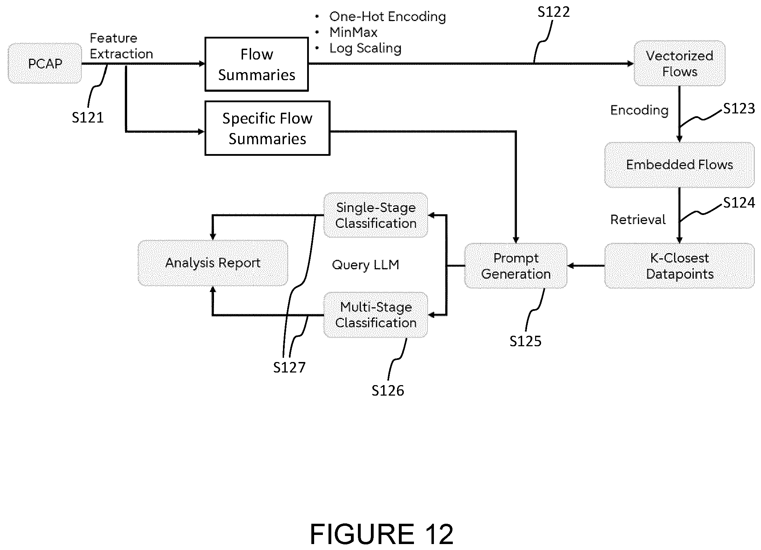

Figure 12 is a further flowchart representing the network transmission diagnosis stage and comprises steps S121-S127, and shows PCAP being received (corresponding to an unknown flow - in this case the data does not include an attack type, i.e. a classification) and at step S121 generation of flow summaries based thereon (general and specific - the specific summaries including e.g. address names) according to the 1. flow description mechanism; at step S122 generation of vectors (vectorized flows) based on the (general) flow summaries according to the 2. flow vectorization mechanism; at step S123 encoding the vectors to generate embedded flows according to the 5. flow embedding mechanism; at step S124 retrieving k-closest embedded flows (datapoints) from the vector store according to the 8. k-closest flow retrieval mechanism; at step S125 prompt generation based on the k-closest flows' summaries and the unknown flow's (specific) summary according to the 9. prompt generation mechanism; at step S126 classification of the unknown flow according to the 10. single-stage classification or 11. multi-stage classification mechanisms; and at step S127 generation of a report (analysis report) based on the classification according to the 12. report generation mechanism.

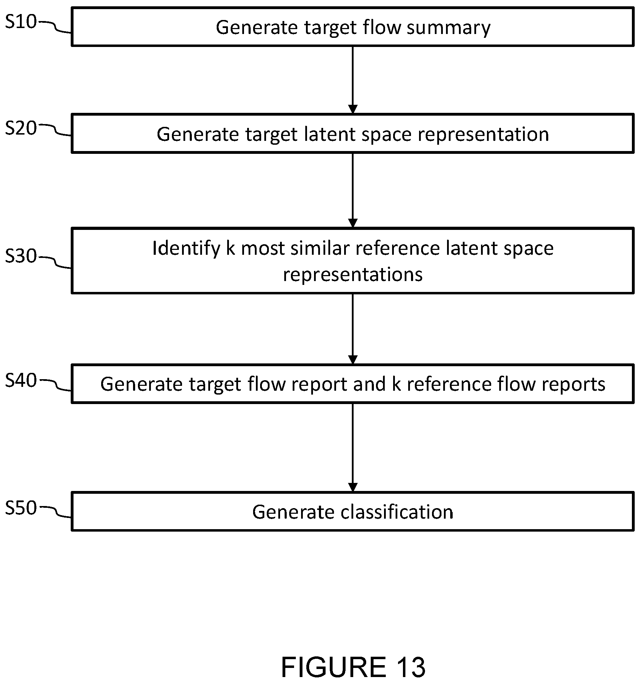

Figure 13 is a flowchart illustrating a method comprising steps S10-S50.

Step S10 comprises generating a target flow summary. That is, step S10 comprises generating, based on input network packet data, a target flow summary comprising information (in a semi-structured data format) relating to (a target) packet flow between two/a pair of (network) addresses/entities during a target time period.

Step S20 comprises generating a target latent space representation. That is, step S20 comprises generating, (using an encoder and) based on the target flow summary, a target latent space representation corresponding to the target flow summary.

Step S30 comprises identifying k most similar reference latent space representations. That is, step S30 comprises identifying, from among a plurality of reference latent space representations, k reference latent space representations most similar to the target latent space representation, wherein the plurality of reference latent space representations correspond to a plurality of reference flow summaries (based on reference network packet data) and to a plurality of classifications, wherein k is an integer greater than 1.

Step S40 comprises generating a target flow report and k reference flow reports. That is, step S40 comprises generating, using a first large language model, LLM, and based on the target flow summary, a target flow report/portrait in natural language format and generating, using the first LLM and based (respectively) on (the) k reference flow summaries corresponding respectively to the identified k reference latent space representations, k reference flow reports/portraits in natural language format (corresponding respectively to the k reference flow summaries).

Step S50 comprises generating a classification. That is, step S50 comprises generating, using a second LLM and based on the target flow report/portrait and the k reference flow reports/portraits with their corresponding classifications, a classification of the (target) packet flow as malicious or benign (wherein the second LLM has been fine-tuned/trained based on training flow reports/portraits to classify the training flow descriptions as malicious or benign).

Step S10 may be considered to correspond in some respects to the 1. flow description mechanism and corresponding description may apply to step S10 and vice versa. Step S20 may be considered to correspond in some respects to the 2. flow vectorization and 5. flow embedding mechanisms and corresponding description may apply to step S20 and vice versa. Step S30 may be considered to correspond in some respects to the 8 k-closest retrieval mechanism and corresponding description may apply to step S30 and vice versa. Step S40 may be considered to correspond in some respects to the 6. flow textualization mechanism and corresponding description may apply to step S40 and vice versa. Step S50 may be considered to correspond in some respects to the 10. single-stage classification and/or 1. multi-stage classification mechanisms and corresponding description may apply to step S50 and vice versa.

In line with Figure 13, there is disclosed herein a computer-implemented method comprising: generating, based on input network packet data, a target flow summary comprising information (in a semi-structured data format) relating to (a target) packet flow between two/a pair of (network) addresses/entities during a target time period; generating, (using an encoder and) based on the target flow summary, a target latent space representation corresponding to the target flow summary; identifying, from among a plurality of reference latent space representations, k reference latent space representations most similar to the target latent space representation, wherein the plurality of reference latent space representations correspond to a plurality of reference flow summaries (based on reference network packet data) and to a plurality of classifications, wherein k is an integer greater than 1; generating, using a first large language model, LLM, and based on the target flow summary, a target flow report/portrait in natural language format and generating, using the first LLM and based (respectively) on (the) k reference flow summaries corresponding respectively to the identified k reference latent space representations, k reference flow reports/portraits in natural language format (corresponding respectively to the k reference flow summaries); generating, using a second LLM and based on the target flow report/portrait and the k reference flow reports/portraits with their corresponding classifications, a classification of the (target) packet flow as malicious or benign (wherein the second LLM has been fine-tuned/trained based on training flow reports/portraits to classify the training flow descriptions as malicious or benign).

The input network packet data may comprise packet capture (PCAP) data.

The target flow summary may comprise the information in a JavaScript Object Notation (JSON) file.

The target flow summary may comprise statistical information about packets received and sent in the packet flow (and information indicating the two addresses).

The reference flow summaries each may comprise statistical information about packets received and sent in a corresponding reference packet flow (and information indicating the two addresses concerned).

The target flow summary (and each reference flow summary) may comprise, as the information, any of: a number of packets received; a number of packets sent; a size of data received; a size of data sent; a mean received packet size; a mean sent packet size; standard deviation of received packet size; standard deviation of sent packet size; a protocol; a source IP address; a Destination IP address; a Source Port; a Destination Port; a Start Time (of the packet flow); an End Time (of the packet flow); a total time the packet flow occurred; an Application layer; a Service Name; a Source Host Name; a Destination Host Name; an Internal Source; an Internal Destination; an Initial Sequence Number; a Final Sequence Number; an Initial Acknowledgement Number; and a Final Acknowledgement Number.

Generating the target flow summary may comprise defining one of the two addresses as a sender and the other of the two addresses as a receiver.

Generating the target latent space representation may comprise generating, based on the target flow summary, a target numerical vector and generating the target latent space representation based on the target numerical vector.

Generating the target numerical vector may comprise converting information in the target flow summary into a numerical form by using one-hot encoding for categorical information and by normalisation for numerical information.

Generating the target latent space representation may comprise using an encoder that has been trained in an autoencoder training process comprising generating training latent space representations based on training numerical vectors.

Generating the target latent space representation may comprise using an encoder that has been trained in an autoencoder training process for training an autoencoder comprising the encoder and a decoder, the autoencoder training process comprising: generating, using the encoder and based on training numerical vectors, training latent space representations; generating, based on the training latent space representations, reconstructed numerical vectors; and adjusting weights of the autoencoder based on a reconstruction loss.

The computer-implemented method may comprise, in a training representation generation process, generating the training latent space representations by generating, based on training network packet data, a plurality of training flow summaries, each training flow summary comprising information (in a semi-structured data format) relating to a training packet flow between two addresses during a training time period (the training flow summaries corresponding to a plurality of pairs of addresses and a plurality of training time periods); and generating, (using an/the encoder and) based on the training flow summaries, the plurality of training latent space representations (corresponding to the training flow summaries).

Generating the training latent space representations may comprise generating, based on the training flow summaries, training numerical vectors and generating the training latent space representations based on the training numerical vectors.

Generating the training numerical vectors may comprise converting information in the training flow summaries into a numerical form by using one-hot encoding for categorical information and by normalisation for numerical information.

The computer-implemented method may comprise generating further training numerical vectors by averaging respective pluralities of the training numerical vectors (in a sliding window manner) and wherein generating the training latent space representations may further comprise generating training latent space representations based on the further training numerical vectors.

The computer-implemented method may comprise, before generating the target latent space representation, performing the autoencoder training process.

The computer-implemented method may comprise iterating the autoencoder training process until a/the reconstruction loss is converged.

Each latent space representation may be a representation in a/the latent space of the encoder.

Identifying the k reference latent space representations most similar to the target latent space representation may comprise determining an L2 distance and/or a cosine similarity between the target latent space representation and each reference latent space representation.

Generating the classification of the packet flow as malicious may comprise generating, by the second LLM, a classification of the packet flow as (corresponding to) one of a plurality of attacks.

The computer-implemented method may comprise, when a malicious classification is generated for the packet flow, generating, using a third LLM, a classification of the packet flow as (corresponding to) one of a plurality of attacks.

The plurality of attacks may comprise any of: Address Resolution Protocol Man in the Middle (ARP MitM), active wiretap, Simple Service Discovery Protocol (SSDP), SYN denial of service (DoS), fuzzing, and operating system (OS) scan.

The computer-implemented method may comprise, when a malicious classification is generated for the packet flow, generating, using a third LLM, a classification of the packet flow as one of a plurality of types of attacks.

The plurality of types of attacks may comprise any of a man in the middle (MitM) type of attack, a denial of service (DoS) type of attack, and a reconnaissance type of attack.

The computer-implemented method may comprise generating, using at least one further LLM depending on the classification of the type of attack, a classification of the packet flow as one of a plurality of attacks corresponding to the type of attack.

The at least one further LLM may comprise an LLM corresponding to each type of attack.

The computer-implemented method may comprise, when a malicious classification is generated for the packet flow, generating, using a third LLM, a classification of the packet flow as one of a plurality of types of attacks, and generating, using at least one further LLM depending on the classification of the type of attack, a classification of the packet flow as one of a plurality of attacks corresponding to the type of attack.

The second LLM (and optionally the third LLM) (and further optionally the at least one further LLM), may have been trained according to a fine-tuning process comprising, for the or each LLM concerned, using the LLM to generate its classifications for training flow reports and adjusting weights of the LLM based on a difference between the generated classifications and ground truth classifications corresponding to the training flow reports.

The computer-implemented method may comprise, before generating the classification, performing the fine-tuning process.

The computer-implemented method may comprise, in a representation generation process, generating the plurality of reference latent space representations by: generating, based on reference network packet data, a plurality of reference flow summaries, each reference flow summary comprising information (in a semi-structured data format) relating to a reference packet flow between two addresses during a reference time period (the reference flow summaries corresponding to a plurality of pairs of addresses and a plurality of reference time periods); and generating, (using an/the encoder and) based on the reference flow summaries, the plurality of reference latent space representations (corresponding to the reference flow summaries).

Each reference flow summary may comprise information in line with the target flow summary in respect of the reference packet flow concerned.

Generating the reference latent space representations may comprise generating, based on the reference flow summaries, reference numerical vectors and generating the reference latent space representations based on the reference numerical vectors.

Generating the reference numerical vectors may comprise converting information in the reference flow summaries into a numerical form by using one-hot encoding for categorical information and by normalisation for numerical information.

The computer-implemented method may comprise generating further reference numerical vectors by averaging respective pluralities of the reference numerical vectors (in a sliding window manner) and wherein generating the reference latent space representations may further comprise generating reference latent space representations based on the further reference numerical vectors.

Each packet in the reference network packet data may be associated with a classification and the classification corresponding to a given reference latent space representation may depend on the classifications of the packets upon which it is based.

The reference time periods may be defined in a sliding window manner.

The computer-implemented method may comprise, when a packet flow is identified as malicious, instructing at least one entity associated with the two addresses to take an action in response to the malicious packet flow.

The instruction may be to limit communication.

The computer-implemented method may comprise, when a packet flow is identified as malicious, transmitting a notification to at least one entity associated with the two network addresses that the packet flow is malicious.

The computer-implemented method may comprise generating an analysis report comprising information relating to the classification of the packet flow.

The report may comprise recommendations for mitigating against the malicious packets and/or attack, when the flow is identified as malicious.

There is also disclosed herein a computer program which, when run on a computer, causes the computer to carry out a method comprising: generating, based on input network packet data, a target flow summary comprising information (in a semi-structured data format) relating to (a target) packet flow between two/a pair of (network) addresses/entities during a target time period; generating, (using an encoder and) based on the target flow summary, a target latent space representation corresponding to the target flow summary; identifying, from among a plurality of reference latent space representations, k reference latent space representations most similar to the target latent space representation, wherein the plurality of reference latent space representations correspond to a plurality of reference flow summaries (based on reference network packet data) and to a plurality of classifications, wherein k is an integer greater than 1; generating, using a first large language model, LLM, and based on the target flow summary, a target flow report/portrait in natural language format and generating, using the first LLM and based (respectively) on (the) k reference flow summaries corresponding respectively to the identified k reference latent space representations, k reference flow reports/portraits in natural language format (corresponding respectively to the k reference flow summaries); generating, using a second LLM and based on the target flow report/portrait and the k reference flow reports/portraits with their corresponding classifications, a classification of the (target) packet flow as malicious or benign (wherein the second LLM has been fine-tuned/trained based on training flow reports/portraits to classify the training flow descriptions as malicious or benign).

There is also disclosed herein an information processing apparatus comprising a memory and a processor connected to the memory, wherein the processor is configured to: generate, based on input network packet data, a target flow summary comprising information (in a semi-structured data format) relating to (a target) packet flow between two/a pair of (network) addresses/entities during a target time period; generate, (using an encoder and) based on the target flow summary, a target latent space representation corresponding to the target flow summary; identify, from among a plurality of reference latent space representations, k reference latent space representations most similar to the target latent space representation, wherein the plurality of reference latent space representations correspond to a plurality of reference flow summaries (based on reference network packet data) and to a plurality of classifications, wherein k is an integer greater than 1; generate, using a first large language model, LLM, and based on the target flow summary, a target flow report/portrait in natural language format and generating, using the first LLM and based (respectively) on (the) k reference flow summaries corresponding respectively to the identified k reference latent space representations, k reference flow reports/portraits in natural language format (corresponding respectively to the k reference flow summaries); generate, using a second LLM and based on the target flow report/portrait and the k reference flow reports/portraits with their corresponding classifications, a classification of the (target) packet flow as malicious or benign (wherein the second LLM has been fine-tuned/trained based on training flow reports/portraits to classify the training flow descriptions as malicious or benign).

Features of the method aspect may be applied to the computer program and information processing apparatus aspects and vice versa.

It will be appreciated that the implementation described above with respect to Figures 5-12 may be considered a specific implementation of the Figure 13 method.

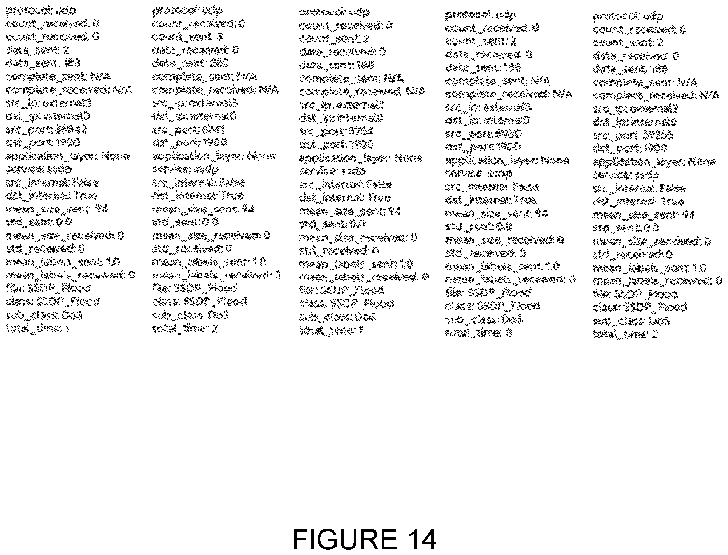

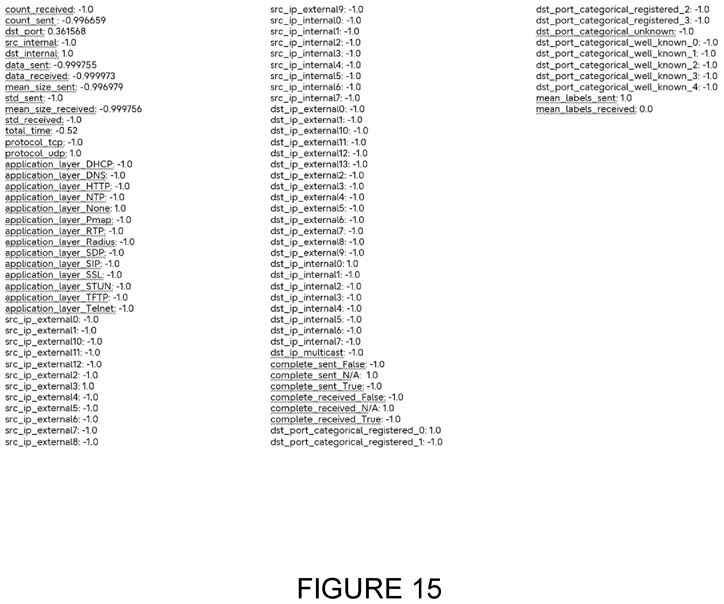

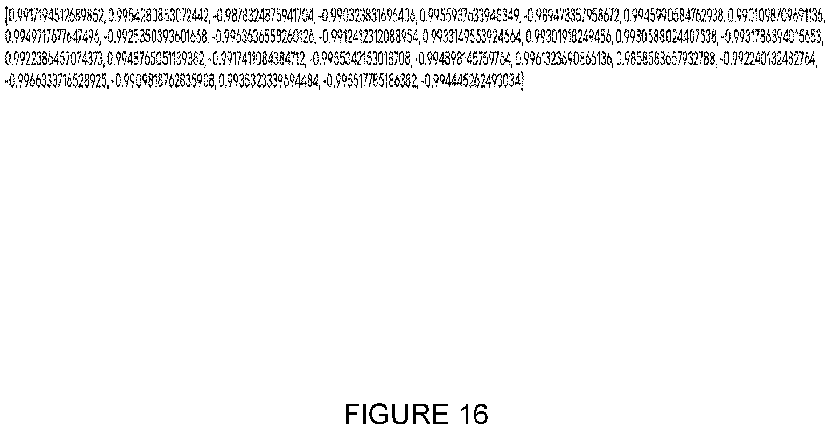

An example/test will be briefly described in line with the implementation described above with reference to Figures 5-12. In this example only the Network Transmission Diagnosis stage is demonstrated. This test was done on the Kitsune dataset (Shon, Taeshik, and Jongsub Moon. "A hybrid machine learning approach to network anomaly detection." Information Sciences 177.18 (2007): 3799-3821), specifically on their SSDP Flood PCAP and Label files. The Flow Description mechanism generated the 5 flow summaries shown in Figure 14. The vectorization mechanism generated, based on the flow summaries, the numerical vectors shown in Figure 15. And the latent space representations based on these numerical vectors are shown in Figure 16.

This embedding (latent space representation) is then used to query the vector store to find the 5 closest reference flows. For brevity the reference flows are not shown, but they were each representative of an SSDP Flood attack. The prompt was generated and transferred into the single-stage fine-tuned LLM model of ChatGPT3.5 (via the Azure API). It returned a "Malicious - SSDP Flood" answer for the classification of the unknown 5 flows - which is correct.

Some disadvantages with existing methods for anomaly detection and Root Cause Analysis (RCA) in cybersecurity are described below:
The current state of anomaly detection and Root Cause Analysis (RCA) in cybersecurity is heavily reliant on manual processes performed by experts, which are time-consuming and labor-intensive. This reliance is problematic due to the limited availability of human experts and the tedious nature of the work, underscoring the need for automation. Additionally, existing methods often fail to provide detailed, human-understandable explanations of security incidents, which are crucial for effective incident response.

The usage of LLMs can help solve these issues but here are problems with LLMs for cyber-security, including the following. Current solutions work only on natural language texts. This goes both for LLMs and RAG solutions. LLMs are pretrained on a large corpus of web pages. While this does include some network traffic data, it is limited and sporadic. This severely limits any "out of the box" LLM's, such as ChatGPT, to analyze and understand network traffic. RAGs which can be used to supplement these LLMs' knowledge limitations are also completely focused on natural language text data yet again coming to the same limitation. Some less-than-ideal improvements that can be made are as follows:
1. Pre-train an LLM on a large corpus of network traffic data: While this will achieve the desired results, it is also cost prohibitive for many enterprises and requires said large corpus which is not freely available.
2. Transforming network traffic into text: If done directly this loses the nuances of network data. If done by transforming the network traffic into a story this greatly expands the number of words needed this making it difficult for LLMs to comprehend large amount of network traffic data.
3. Using RAG on textualized network traffic: Using existing embedding techniques to compare between directly textualized network traffic datapoints does not allow for the nuances of network data to be compared, and this retrieval will be of irrelevant network traffic datapoints.

The methodology disclosed herein solves these problems and involves first converting the network data into a latent space which will take the nuances of network traffic data into account and then using that along with a textualized and shortened explanation of the network traffic as the "retrieved documents" for the LLM. This, along with a fine-tuned LLM which understands the format of the prompt and the expected thinking pattern will reduce the amount of tokens used in the prompts and allow for the LLM capabilities of understanding natural text and providing complex and robust answers that include classification, mitigation and future prevention.

The methodology disclosed herein unlocks the use of network transmission data along with an LLM and can be used for general network maintenance and network design utilizing the learning power of LLMs.

Disclosed herein is a mechanism to transfer network transmission data into text that allows it to be compared with other network transmission data, thus creating a classification system that also leverages to power of LLMs to not only provide a classification, but also a security assistant.

Some benefits of the disclosed methodology include:
- Automated Anomaly Detection and Classification: The innovation is a method that provides accuracy and clarity to the automated procedure to find and categorize network anomalies thus decreasing the need for human experts. Fine-tuning LLMs for network security helps in decreasing the human factor in managing such tasks as it allows the processing of big amounts of data efficiently.
- Detailed Explanations of Security Incidents: The proposed methodology provides detailed explanations about security incidents comprehensible for humans, and help network administrators to analyze the causes more efficiently, thereby decreasing work time and improving network performance.
- Enhanced Efficiency and Reduced Costs: The methodology reduces manual analysis and intervention times in addition to costs associated with such interventions.
- Improved Accuracy and Reliability: Advanced LLMs trained on specific network data boost the accuracy and dependability of network anomaly detection and attack type classification.
- Ability to Scale and Adapt: The system's automatic nature allows it to expand or shrink as needed based on the network's available data making it adaptable to different network structures and sizes.
- Context-Aware Analysis: The methodology including the k-closest retrieval gives the LLM necessary context from known network flows first. This helps the LLM to spot patterns and similarities leading to more accurate results.
- PCAP Files Analysis: The method of grouping network traffic packets into flows allows for the detection and categorization of anomalies straight from PCAP files, which people often use to capture network traffic.

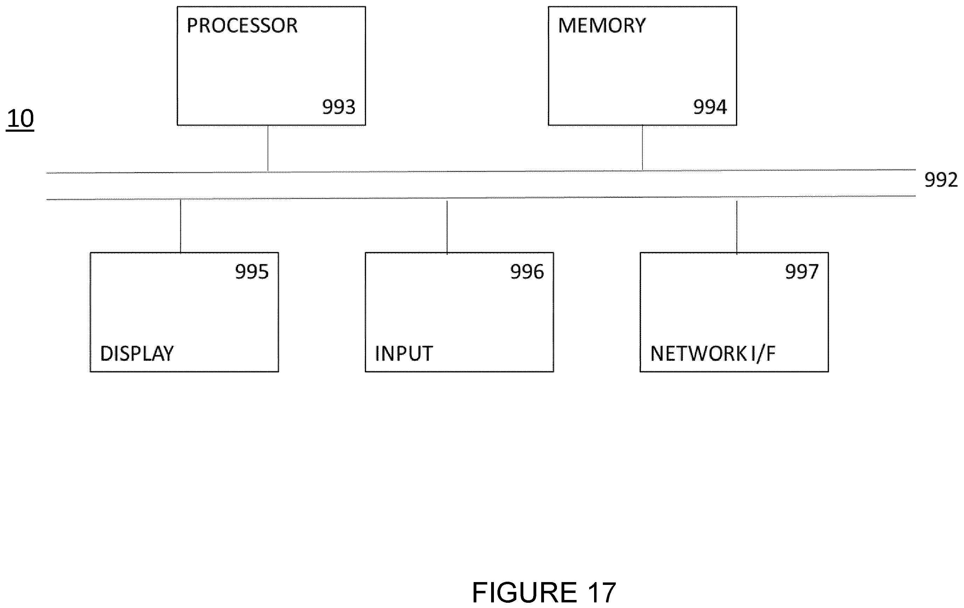

Figure 17 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S10-S50 and/or the operations of any mechanisms/modules described above, e.g. any of the mechanisms 1-12 and/or any of the stages A-C.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S10-S50 and/or the operations of any mechanisms/modules described above, e.g. any of the mechanisms 1-12 and/or any of the stages A-C. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps or mechanism/module operations described herein. The memory 994 stores data being read and written by the processor 993 and may store packet data and/or flow summaries and/or numerical vectors and/or latent space representations and/or flow reports and/or a vector store and/or LLMs and/or weights for LLMs/encoder and/or information on attacks and attack types and/or reference data and/or training data and/or analysis reports and/or other data, described above, and/or programs for executing any of the method steps/operations described above, e.g. any of steps S10-S50 and/or the operations of any mechanisms/modules described above, e.g. any of the mechanisms 1-12 and/or any of the stages A-C. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as packet data and/or flow summaries and/or numerical vectors and/or latent space representations and/or flow reports and/or a vector store and/or information on attacks and attack types and/or reference data and/or training data and/or analysis reports and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 17. Such a computing device need not have every component illustrated in Figure 17, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention, e.g. any of steps S10-S50 and/or the operations of any mechanisms/modules described above, e.g. any of the mechanisms 1-12 and/or any of the stages A-C may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

### Implementation with experimental results

In this section an implementation, together with experimental results, is described.

### 1 General architecture

The implementation/design has the main objective of creating a RAG-like mechanism which can take network communications in packets, group them into flows between two devices and return information about similar flows that will help an LLM classify them. This is achieved through two stages: On the first stage is a preparatory stage where a vector store database is generated. To generate this database, sequence of packets are processed to create a latent space representation. Then, this representation is paired with metadata and stored in the database. The second stage is the inference phase, in which an unknown set of packets is classified. In this stage, a retrieval mechanism in the database is used to obtain the K-closest (in latent space) flows to the target flow. The design includes a *Flow Descriptor, Flow Vectoriser, Latent Space Generator, Flow Embedder, and Flow Retriever.*

### 1.2 Flow Descriptor

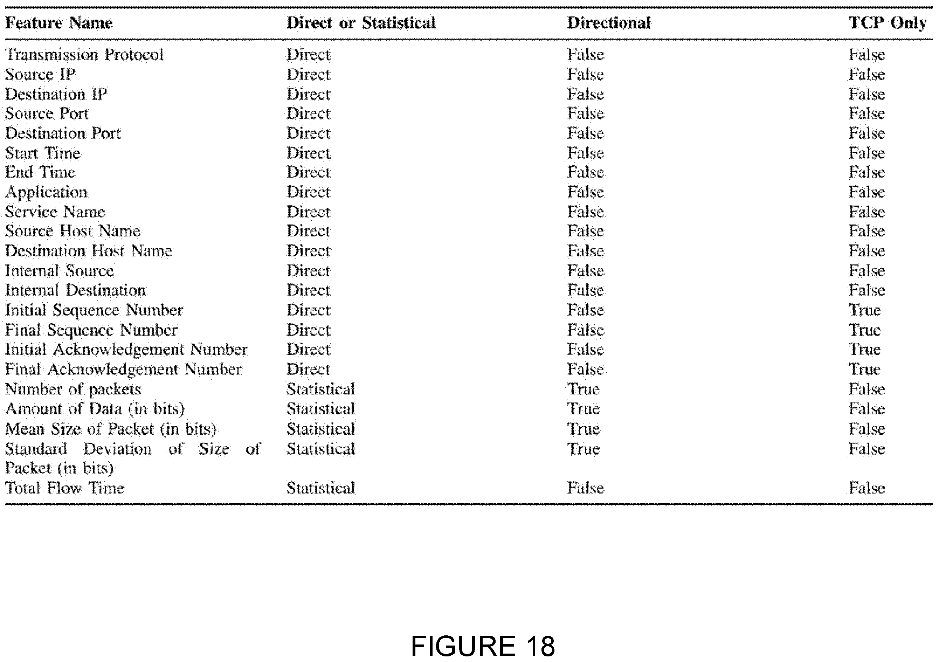

The input to the system is a packet capture (PCAP) file and a label file used only during the first stage. The PCAP file contains the packets that have been processed by a network appliance, such as a router. The label file has the classification of the packets, if they are benign or part of some attack, and is used to create the vector store's context in subsection 2.6. This mechanism goes over the PCAP file and groups the packets into flows. The flows are defined in two ways. If the packets are TCP, then a flow is defined as a TCP connections. Otherwise, the flow is described as all packets that share the 4-tuple: *source ip, destination ip, source port, destination port.* These flows are defined as bi-directional flows where the source is defined as the transmission instigator (host or sender) and the destination is defined as the transmission receiver (or server). Flows that are not TCP are grouped in 2 different ways. The first option is to use all packets in a single PCAP file to define a flow. The second is to use 5 second intervals of the packets in the file to describe a flow. In the latter, more flows are defined. After each flow is defined a set of features is extracted from it and stored in a ISON file. The features are as shown in Figure 18 which is a table presenting an overview of the features. Directional features are captured twice, once from the packets sent from the sender to the receiver, and again the other way.

If a label file is also included then the labels are also stored in the JSON file, where each flow is defined as malicious if even one of its packets is malicious (there are no flows with packets from different attacks). Finally, some features are generalized to avoid over fitting to certain specific traits. The source and destination IP along with the start and end times are dropped. Also host names are changed to become a generic *host_i.* To summarize, the final output of this section is a JSON file which is a list of all the flows, each flow is a dictionary containing the features explained above.

### 1.3 Flow Vectoriser

This module takes the flows JSON file compiled by the Flow Descriptor and turns each flow into a numerical vector. These numerical vectors are the datapoints that make up the datasets used in future sections of the design.

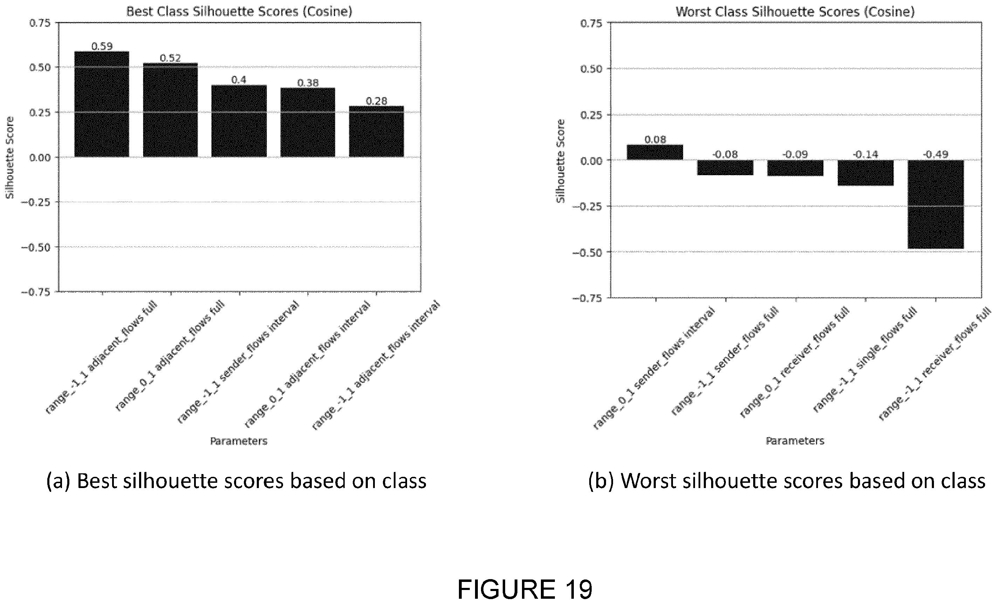

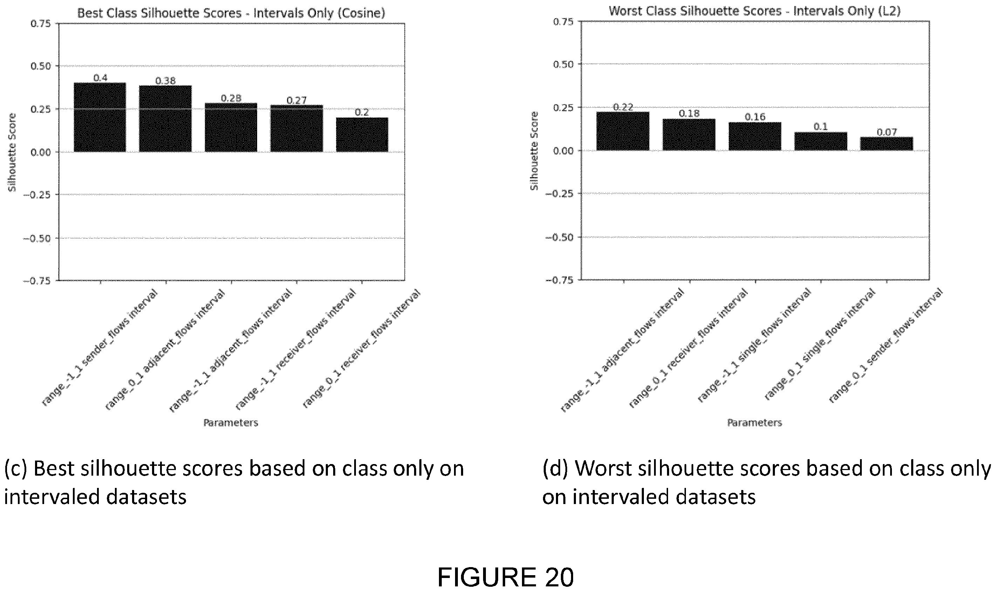

The first decision is how to aggregate the different flows defined by the Flow Descriptor (subsection 1.2). One way is to have each individual flow constitute a separate datapoint. As shown in the silhouette scores (Figures 19 and 20) discussed in subsection 3.2, where none of the top silhouette scores are from individual flows, this may be sub-optimal.

This may be because many anomalies cannot be detected analysing a single flow. For example, a DDoS attack constitutes many benign-looking transmission from many different senders aimed at a single receiver. So while a single flow would have no distinctive features, many viewed together, would. To address this, four aggregation schemes are considered. The first is the single flow scheme outlined above. The next takes five flows that started consecutively and grouping them together, which may be referred to as the adjacent scheme. After that, is five flows that started consecutively from a specific sender, the sender scheme. And finally, five flows that started consecutively to a specific receiver, the receiver scheme. Hence three new JSON files are created where the grouped flows are grouped together. The flows are grouped in a sliding window that jumps 2 flows every grouping. These groups are not an exhaustive list of all possible groupings, others are outside the scope of this paper. The vectorisation is then done on each of the aggregated datasets using known transformation algorithms on the different features of the flows, where for grouped flows the feature value after transformation is the mean of each of the transformed values of the flows. A group of flows is labelled malicious if at least one of the flows in the group is malicious.
- Categorical features: These are transmission protocol, application layer, source IP, destination IP, completion of sent data, completion of received data, and the division of destination port into 7 categories based on the ubiquity of their use. These features are transformed using one-hot encoding.
- Numerical features: These are number of packets received and sent, amount of data received and sent, length of the flow in nanoseconds, mean size of the packets received and sent, and the standard deviation of the size of the packets received and sent. These are min-max scaled using either a [0,1] scale or a [-1,1] scale.
- High variance features: this includes only the destination port. This features first undergoes logarithmic scaling and then undergoes min-max scaling like the numerical features.
- The rest of the non-label features are dropped as they are irrelevant to understanding the function of a flow.

### 1.4 Latent Space Generator

In order to enable the RAG-like mechanism it is first necessary to create the search capabilities that will take a datapoint and return the most similar datapoints already stored. This is done through a latent space representation that will find some underlying latent variables in datapoints and use them to place each of the datapoints on that latent space. The tool to do this is the AE (autoencoder). AEs are a group of ML model that use unsupervised learning to learn the underlying latent variables of different datas. They are comprised of two portions, the first, an encoder takes data x and generates the latent variables in a vector z. The second, the decoder, attempts to recreate x from z. The model is trained by backwards propagation on the reconstruction loss between the original datapoint and the output of the decoder. Each of these portions has different uses once trained. The decoder can generate new data by taking a noise vector the same size as z and using it to generate a new x'. Other research has been done to use autoencoders to create NIDS. In this they would train an AE model on only benign data, thus having it reduce the reconstruction error on only that. When some anomalous data is put through the trained AE, it would have a much larger error. This does not serve the purposes herein though, as it does not enable search functionality. During the first stage, the autoencoder is trained on the training set, yet after it is trained (and the best AE hyperparameters deduced from K-fold cross validation) the decoder is discarded and only the encoder kept. This encoder, as mentioned previously, can now take any datapoint, and return its latent space representation. After that is done, on the first stage, the entire training set is run through the encoder and their latent space representation saved along with label, in a vector store. These become the new datapoints, the latent space vectors of the previous datapoints with their label. During the second stage, the encoder is used to create the latent space representation of unlabeled testing data.

### 1.5 Flow Embedder

This is simply the encoder portions of the trained AE presented in the previous subsection. It is differentiated due to its dual use, in the first stage in calculating the latent space representation of the training datapoints so that they me be stored in a vector store along with their label to create the datapoints that the RAG-like mechanism will search and retrieve, and in the second stage in calculating the latent space representation of unlabelled testing data for use in the retrieval mechanism. The datapoints that have been collected from the Latent Space Generator are now placed in a vector store. With this ends the first stage of the mechanism and the RAG-like mechanism is ready for use.

### 1.6 Flow Retriever

On the second stage, after the latent space representation of some datapoint from the flow vectoriser is calculated, the retrieval mechanism will compare the distance of that datapoint to those that have been saved in the vector store. In the experiment the distance functions used to compare the distances are either L2 or Cosine similarity. From all the stored datapoints, only those with the least distance are returned. They are retrieved along with their labels, which are what will be used to provide contexts for a future LLM in analyzing the packet data.

### 2 Implementation

### 2.1 Dataset

**The dataset** used for this experiment is the packets captured during the Kitsune1 experiment, referenced above. This includes 9 different PCAP files, one per attack, and their corresponding label files.

### 2.2 Environment

The experiments were run on an Azure Standard NC24ads A100 v4 server with an Ubuntu 22.04 OS. All experiments run on either Python scripts or Jupyter Notebooks on python version 3.10.12. Important python libraries include Pandas for data handling, Pytorch for AE, Sklearn for result gathering, and ChromaDB for vector store capabilities.

### 3 Experiments and Results

Here, the steps taken to test the mechanism are explained. An aim was to create a latent space representation of network communications that were collected from network packets. Then to query network communications that represent attacks in that latent space to attempt and create a retrieval mechanism that retrieves other communications from the same type of attack.

### 3.1 Procedure

The PCAP of each attack is separated into 5 second fragments where each fragment is saved again in a new PCAP file. At the same time a new label file is created that include only the packets stored in the related PCAP file. Each PCAP file along with its corresponding label file is then converted into flows. Each flow is described by the *Flow Descriptor* described in subsection 1.2 along with its label features. The label features are:
- Mean number of packet sent from the sender to the receiver of the flow that were flagged as malicious.
- Mean number of packets received from the sender of the flow to the receiver that were flagged as malicious.
- The class of the flow, which determined to be one of the attacks of either of the means are bigger than 0, benign otherwise.
- The subclass of the class, which is determined to be:
   ∘ Benign if the flow is classed as benign
   ∘ Recon if the class is Fuzzing or OS Scan
   ∘ MitM if the class is ARP MitM, Active Wiretap, or Video Injection
   ∘ DoS is the class is SSDP Flood, SSL Renegotiation or SYN DoS

All flows are then merged into two files, the first including all the flows that were extracted from the original PCAPs and the second from the flows that were extracted from the segmented files. The files are split into train and test files using a test size of 20%. For each of the complete files a transformer is created by the process mentioned in *Flow Vectoriser* (subsection 1.3). All aggregated flows are done by taking the mean of a sliding window with a length of 5 and a step size of 2 across the data extracted from each attack file and ordered by their start time. At this point there are 16 distinct training sets split by: PCAP size (full or split into intervals), normalization of vector ([-1,1] or [0,1]), and aggregations (none, by start time alone, start time and sender, start time and receiver). For each of the 16 training sets an AE was tuned on a variety of AE specific hyperparameters to find the best model for that specific set. This was done with a 5-fold hyperparameter tuning on each of the combinations with the mean reconstruction loss as the criterion.

The encoder portions of the trained AEs then becomes the embedding function of that dataset.

Finally, a vector store is initialised using the ChromaDB library 2. The embedding is created for each point in the training sets using the aforementioned embedding function, the document in the list of flows that said datapoint represents, and as for the metadata the label of the datapoint is used. For each training set two collections are created, the first using L2 distance and the second using cosine similarity as their distance functions.

The flows on the test set of each dataset are also passed through the embedding function of their datasets to create the embedded test sets.

### 3.2 Experiments

The first experiment tested the embedding capabilities of the architecture. A successful embedding would create a latent space representation where the different classes (all of the 8 attacks and benign data) are easily separable, so that when new data arrives, it can be easily placed near to datapoints from the same class. A secondary goal is that subclasses would also be separable. This would prove that there are some underlying characteristics that similar attacks share.

In order to test the separability of the embedding function silhouette scores were used. This metric provides a score between -1 and 1 that represents how similar each object is to its own cluster and how different it is from other clusters. This cluster scoring method is especially desirable because it does not require training data and allows to score clustering based on what cluster each point is supposed to belong to (Meshal Shutaywi and Nezamoddin N Kachouie. 2021. Silhouette Analysis for Performance Evaluation in Machine Learning with Applications to Clustering. *Entropy* 23, 6 (2021), 759). Doing this over all the points gives some clue as to how separable are the different classes, but should be taken with a grain of salt as there is major discrepancy between the number of datapoints for each class.

These results showed that there is some viability to the method. The best results were achieved when using the full flows in a range of [-1,1] and having them be adjacent to one another. Yet, knowing that it is unlikely that ever such a complete capture will be available and the great resources it would take to analyze it was decided to also include the results for only using the data available at 5 second intervals. There promising results were also received of up to 0.4 for the same range but on flows sent from a specific sender. All of these are present in Figures 19 and 20. It should also be noted that silhouette scores were taken based on subclasses. Here the overall best score is for the same dataset as the silhouette scores based on classes with a score of 0.62. And for the interval datasets the best silhouette score based on subclasses is 0.52 for a range of [0,1] on adjacent intervals. In all cases the better distance metric was Cosine Similarity.

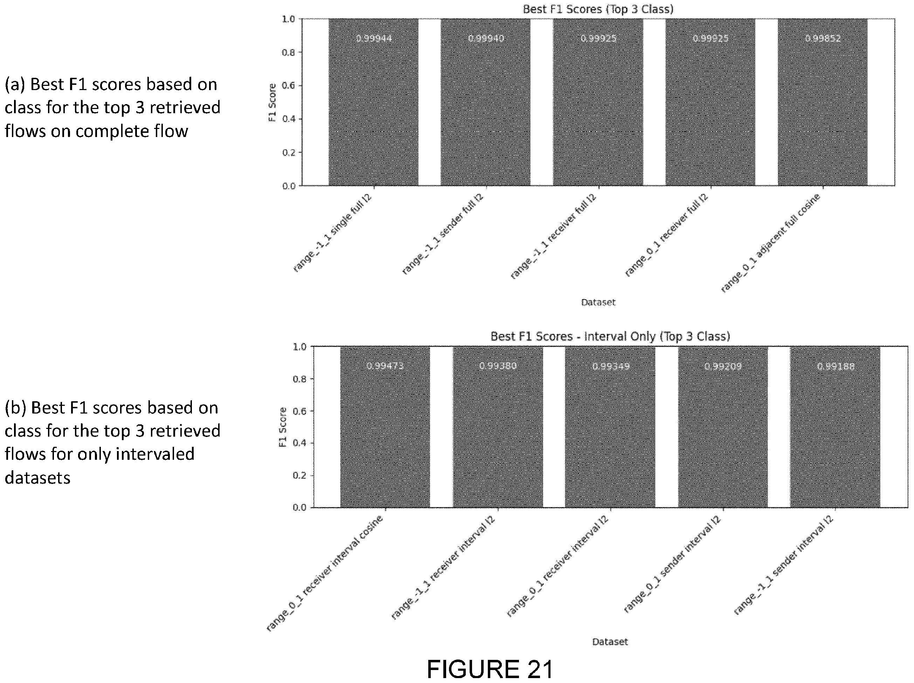

The next experiment tested the retrieval mechanism. The latent space representation of each of the flows in the test sets were used to query the matching vector store and 5 results were returned. Three different predictions were extracted by checking the top 1,3,and 5 results that were retrieved. In case of a tie, the results closer to the query were chosen. Accuracy, Precision, Recall, and FI scores were calculated, yet for brevity only discuss the FI scores are discussed. Figure 21 shows F1 scores.

For these datasets it may be seen that classification is possible up to a high degree. This also holds for the top 1 or top 5 with a difference of less than 0.001 for the best dataset for both. What may be observed is that best dataset has changed between scores for retrieval and silhouette scores.

In order to get a more nuanced resolution of the success rate a confusion matrix was created. This matrix shows the on the *y* - *axis* the actual class and on the x *- axis* the predicted class. With this it can be seen for each class how well it was classified, and for each class which other classes it was mostly confused to.

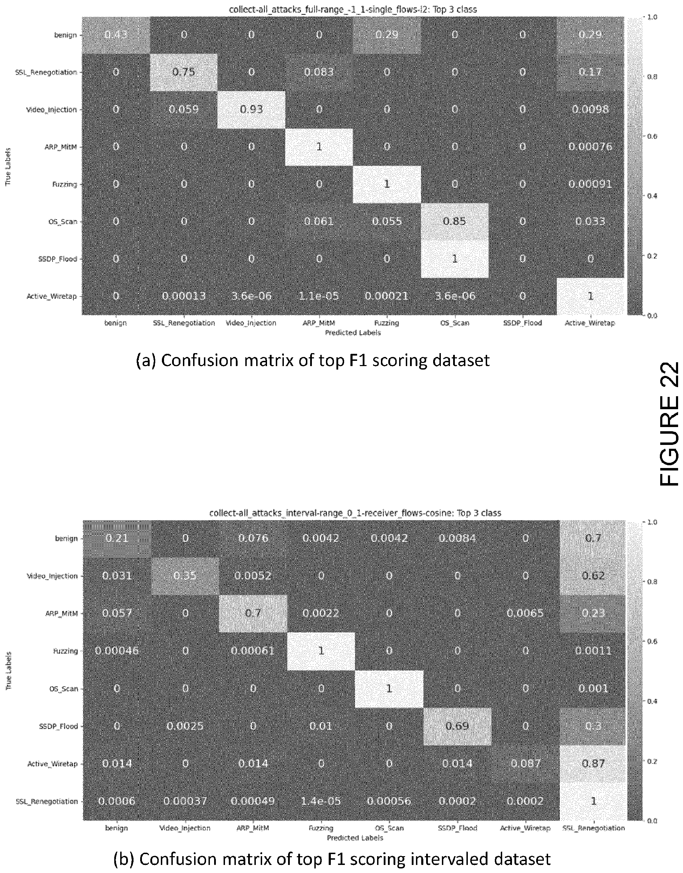

In Figure 22 the confusion matrices of the top FI scoring datasets for the between all datasets and the intervaled datasets respectively are shown. Another way to calculate the success is to see the distance of these confusion matrices from the identity matrix; the Frobenius norm was used. For all datasets the distance is 1.6203 while for only intervaled datasets its 1.9633.

The method shows great potential in future use in cybersecurity and other fields. The results show a high effectiveness in retrieving correctly labeled datapoints that were originally not viable for LLMs in their packet form. Not only can this improve the capabilities of LLMs in the field of cybersecurity, but this also shows that any non-textual datapoint can be made accessible to them. The mechanism presented in this section may be used in combination with a fine-tuned LLMs to increase the performance in classification tasks and provide some cyber security recommendations.

To conclude, in this section is presented a mechanism that uses autoencoders to create a latent space representation of network packets. The mechanism can be used alone or in combination with an LLM for network anomaly classification. The functioning of the mechanism has been validated with experimental data using the Kitsune dataset. The pre-processing of the network packets may be expanded to generate additional features that might help in the differentiation between classes of the network flows. Some of the aggregation methods discussed in this section may be combined to increase the classification performance for certain attacks, such as DDoS. One possible limitation of the mechanism is the limited representation of temporal information between network packets and flows, the use of transformers may be adapted to create a more robust representation of the network features. The mechanism could be implemented using a multi-stage approach, which might improve the classification capabilities for anomalies that are not present in the vector store database.

## Claims

1. A computer-implemented method comprising:
generating (S10), based on input network packet data, a target flow summary comprising information relating to packet flow between two addresses during a target time period;
generating (S20), based on the target flow summary, a target latent space representation corresponding to the target flow summary;
identifying (S30), from among a plurality of reference latent space representations, k reference latent space representations most similar to the target latent space representation, wherein the plurality of reference latent space representations correspond to a plurality of reference flow summaries and to a plurality of classifications, wherein k is an integer greater than 1;
generating (S40), using a first large language model, LLM, and based on the target flow summary, a target flow report in natural language format and generating, using the first LLM and based on k reference flow summaries corresponding respectively to the identified k reference latent space representations, k reference flow reports in natural language format;
generating (S50), using a second LLM and based on the target flow report and the k reference flow reports with their corresponding classifications, a classification of the packet flow as malicious or benign.

2. The computer-implemented method as claimed in claim 1, wherein the target flow summary comprises statistical information about packets received and sent in the packet flow.

3. The computer-implemented method as claimed in claim 1 or claim 2, wherein generating the target latent space representation comprises generating, based on the target flow summary, a target numerical vector and generating the target latent space representation based on the target numerical vector.

4. The computer-implemented method as claimed in claim 3, wherein generating the target numerical vector comprises converting information in the target flow summary into a numerical form by using one-hot encoding for categorical information and by normalisation for numerical information.

5. The computer-implemented method as claimed in claim 3 or claim 4, wherein generating the target latent space representation comprises using an encoder that has been trained in an autoencoder training process comprising generating training latent space representations based on training numerical vectors.

6. The computer-implemented method as claimed in claim 5, comprising, before generating the target latent space representation, performing the autoencoder training process.

7. The computer-implemented method as claimed in any of the preceding claims, wherein identifying the k reference latent space representations most similar to the target latent space representation comprises determining an L2 distance and/or a cosine similarity between the target latent space representation and each reference latent space representation.

8. The computer-implemented method as claimed in any of the preceding claims, wherein generating the classification of the packet flow as malicious comprises generating, by the second LLM, a classification of the packet flow as one of a plurality of attacks.

9. The computer-implemented method as claimed in any of claims 1 to 7, comprising, when a malicious classification is generated for the packet flow, generating, using a third LLM, a classification of the packet flow as one of a plurality of types of attacks, and generating, using at least one further LLM depending on the classification of the type of attack, a classification of the packet flow as one of a plurality of attacks corresponding to the type of attack.

10. The computer-implemented method as claimed in any of the preceding claims, comprising, in a representation generation process, generating the plurality of reference latent space representations by:
generating, based on reference network packet data, a plurality of reference flow summaries, each reference flow summary comprising information relating to a reference packet flow between two addresses during a reference time period; and
generating, based on the reference flow summaries, the plurality of reference latent space representations.

11. The computer-implemented method as claimed in claim 10, wherein generating the reference latent space representations comprises generating, based on the reference flow summaries, reference numerical vectors and generating the reference latent space representations based on the reference numerical vectors.

12. The computer-implemented method as claimed in claim 11, comprising generating further reference numerical vectors by averaging respective pluralities of the reference numerical vectors and wherein generating the reference latent space representations further comprises generating reference latent space representations based on the further reference numerical vectors.

13. The computer-implemented method as claimed in any of the preceding claims, comprising, when a packet flow is identified as malicious, instructing at least one entity associated with the two addresses to take an action in response to the malicious packet flow.

14. A computer program which, when run on a computer, causes the computer to carry out a method comprising:
generating, based on input network packet data, a target flow summary comprising information relating to packet flow between two addresses during a target time period;
generating, based on the target flow summary, a target latent space representation corresponding to the target flow summary;
identifying, from among a plurality of reference latent space representations, k reference latent space representations most similar to the target latent space representation, wherein the plurality of reference latent space representations correspond to a plurality of reference flow summaries and to a plurality of classifications, wherein k is an integer greater than 1;
generating, using a first large language model, LLM, and based on the target flow summary, a target flow report in natural language format and generating, using the first LLM and based on k reference flow summaries corresponding respectively to the identified k reference latent space representations, k reference flow reports in natural language format;
generating, using a second LLM and based on the target flow report and the k reference flow reports with their corresponding classifications, a classification of the packet flow as malicious or benign.

15. An information processing apparatus comprising a memory and a processor connected to the memory, wherein the processor is configured to:
generate, based on input network packet data, a target flow summary comprising information relating to packet flow between two addresses during a target time period;
generate, based on the target flow summary, a target latent space representation corresponding to the target flow summary;
identify, from among a plurality of reference latent space representations, k reference latent space representations most similar to the target latent space representation, wherein the plurality of reference latent space representations correspond to a plurality of reference flow summaries and to a plurality of classifications, wherein k is an integer greater than 1;
generate, using a first large language model, LLM, and based on the target flow summary, a target flow report in natural language format and generating, using the first LLM and based on k reference flow summaries corresponding respectively to the identified k reference latent space representations, k reference flow reports in natural language format;
generate, using a second LLM and based on the target flow report and the k reference flow reports with their corresponding classifications, a classification of the packet flow as malicious or benign.

## Patentansprüche

1. Computerimplementiertes Verfahren, umfassend:
Erzeugen (S10), basierend auf Eingangs-Netzwerkpaketdaten, einer Zielflusszusammenfassung, die Informationen umfasst, die sich auf einen Paketfluss zwischen zwei Adressen während einer Zielzeitspanne beziehen;
Erzeugen (S20), basierend auf der Zielflusszusammenfassung, einer Ziellatentraumdarstellung, die der Zielflusszusammenfassung entspricht;
Identifizieren (S30), unter einer Vielzahl von Referenzlatentraumdarstellungen, von k Referenzlatentraumdarstellungen, die der Ziellatentraumdarstellung am ähnlichsten sind, wobei die Vielzahl von Referenzlatentraumdarstellungen einer Vielzahl von Referenzflusszusammenfassungen und einer Vielzahl von Klassifizierungen entspricht, wobei k eine Ganzzahl größer als 1 ist;
Erzeugen (S40), unter Verwendung eines ersten großen Sprachmodells, LLM, und basierend auf der Zielflusszusammenfassung, eines Zielflussberichts in natürlichsprachlichem Format und ein Erzeugen, unter Verwendung des ersten LLM und basierend auf k Referenzflusszusammenfassungen, die jeweils den identifizierten k Referenzlatentraumdarstellungen entsprechen, von k Referenzflussberichten in natürlichsprachlichem Format;
Erzeugen (S50), unter Verwendung eines zweiten LLM und basierend auf dem Zielflussbericht und den k Referenzflussberichten mit ihren entsprechenden Klassifizierungen, einer Klassifizierung des Paketflusses als bösartig oder gutartig.

2. Computerimplementiertes Verfahren nach Anspruch 1, wobei die Zielflusszusammenfassung statistische Informationen über in dem Paketfluss empfangene und gesendete Pakete umfasst.

3. Computerimplementiertes Verfahren nach Anspruch 1 oder Anspruch 2, wobei das Erzeugen der Ziellatentraumdarstellung ein Erzeugen, basierend auf der Zielflusszusammenfassung, eines numerischen Zielvektors und ein Erzeugen der Ziellatentraumdarstellung basierend auf dem numerischen Zielvektor umfasst.

4. Computerimplementiertes Verfahren nach Anspruch 3, wobei das Erzeugen des numerischen Zielvektors ein Umwandeln von Informationen in der Zielflusszusammenfassung in eine numerische Form durch Verwenden von One-Hot-Codierung für kategoriale Informationen und durch Normalisierung für numerische Informationen umfasst.

5. Computerimplementiertes Verfahren nach Anspruch 3 oder Anspruch 4, wobei das Erzeugen der Ziellatentraumdarstellung ein Verwenden eines Encoders umfasst, der in einem Autoencoder-Trainingsprozess trainiert worden ist, der ein Erzeugen von Trainingslatentraumdarstellungen basierend auf numerischen Trainingsvektoren umfasst.

6. Computerimplementiertes Verfahren nach Anspruch 5, umfassend, vor dem Erzeugen der Ziellatentraumdarstellung, ein Durchführen des Autoencoder-Trainingsprozesses.

7. Computerimplementiertes Verfahren nach einem der vorhergehenden Ansprüche, wobei das Identifizieren der k Referenzlatentraumdarstellungen, die der Ziellatentraumdarstellung am ähnlichsten sind, ein Bestimmen eines L2-Abstands und/oder einer Kosinusähnlichkeit zwischen der Ziellatentraumdarstellung und jeder Referenzlatentraumdarstellung umfasst.

8. Computerimplementiertes Verfahren nach einem der vorhergehenden Ansprüche, wobei das Erzeugen der Klassifizierung des Paketflusses als bösartig ein Erzeugen, durch das zweite LLM, einer Klassifizierung des Paketflusses als einen von einer Vielzahl von Angriffen umfasst.

9. Computerimplementiertes Verfahren nach einem der Ansprüche 1 bis 7, umfassend, wenn eine bösartige Klassifizierung für den Paketfluss erzeugt wird, ein Erzeugen, unter Verwendung eines dritten LLM, einer Klassifizierung des Paketflusses als einen von einer Vielzahl von Angriffstypen, und ein Erzeugen, unter Verwendung mindestens eines weiteren LLM in Abhängigkeit von der Klassifizierung des Angriffstyps, einer Klassifizierung des Paketflusses als einen von einer Vielzahl von Angriffen, die dem Angriffstyp entsprechen.

10. Computerimplementiertes Verfahren nach einem der vorhergehenden Ansprüche, umfassend, in einem Darstellungserzeugungsprozess, Erzeugen der Vielzahl von Referenzlatentraumdarstellungen durch:
Erzeugen, basierend auf Referenz-Netzwerkpaketdaten, einer Vielzahl von Referenzflusszusammenfassungen, wobei jede Referenzflusszusammenfassung Informationen umfasst, die sich auf einen Referenzpaketfluss zwischen zwei Adressen während einer Referenzzeitspanne beziehen; und
Erzeugen, basierend auf den Referenzflusszusammenfassungen, der Vielzahl von Referenzlatentraumdarstellungen.

11. Computerimplementiertes Verfahren nach Anspruch 10, wobei das Erzeugen der Referenzlatentraumdarstellungen ein Erzeugen, basierend auf den Referenzflusszusammenfassungen, von numerischen Referenzvektoren und ein Erzeugen der Referenzlatentraumdarstellungen basierend auf den numerischen Referenzvektoren umfasst.

12. Computerimplementiertes Verfahren nach Anspruch 11, umfassend ein Erzeugen weiterer numerischer Referenzvektoren durch Mitteln jeweiliger Vielzahlen der numerischen Referenzvektoren, und wobei das Erzeugen der Referenzlatentraumdarstellungen ferner ein Erzeugen von Referenzlatentraumdarstellungen basierend auf den weiteren numerischen Referenzvektoren umfasst.

13. Computerimplementiertes Verfahren nach einem der vorhergehenden Ansprüche, umfassend, wenn ein Paketfluss als bösartig identifiziert wird, ein Anweisen mindestens einer Entität, die den zwei Adressen zugeordnet ist, als Reaktion auf den bösartigen Paketfluss eine Maßnahme zu ergreifen.

14. Computerprogramm, das, wenn es auf einem Computer ausgeführt wird, den Computer veranlasst, ein Verfahren auszuführen, umfassend:
Erzeugen, basierend auf Eingangs-Netzwerkpaketdaten, einer Zielflusszusammenfassung, die Informationen umfasst, die sich auf einen Paketfluss zwischen zwei Adressen während einer Zielzeitspanne beziehen;
Erzeugen, basierend auf der Zielflusszusammenfassung, einer Ziellatentraumdarstellung, die der Zielflusszusammenfassung entspricht;
Identifizieren, unter einer Vielzahl von Referenzlatentraumdarstellungen, von k Referenzlatentraumdarstellungen, die der Ziellatentraumdarstellung am ähnlichsten sind, wobei die Vielzahl von Referenzlatentraumdarstellungen einer Vielzahl von Referenzflusszusammenfassungen und einer Vielzahl von Klassifizierungen entspricht, wobei k eine Ganzzahl größer als 1 ist;
Erzeugen, unter Verwendung eines ersten großen Sprachmodells, LLM, und basierend auf der Zielflusszusammenfassung, eines Zielflussberichts in natürlichsprachlichem Format und ein Erzeugen, unter Verwendung des ersten LLM und basierend auf k Referenzflusszusammenfassungen, die jeweils den identifizierten k Referenzlatentraumdarstellungen entsprechen, von k Referenzflussberichten in natürlichsprachlichem Format;
Erzeugen, unter Verwendung eines zweiten LLM und basierend auf dem Zielflussbericht und den k Referenzflussberichten mit ihren entsprechenden Klassifizierungen, einer Klassifizierung des Paketflusses als bösartig oder gutartig.

15. Informationsverarbeitungseinrichtung, umfassend einen Speicher und einen mit dem Speicher verbundenen Prozessor, wobei der Prozessor konfiguriert ist zum:
Erzeugen, basierend auf Eingangs-Netzwerkpaketdaten, einer Zielflusszusammenfassung, die Informationen umfasst, die sich auf einen Paketfluss zwischen zwei Adressen während einer Zielzeitspanne beziehen;
Erzeugen, basierend auf der Zielflusszusammenfassung, einer Ziellatentraumdarstellung, die der Zielflusszusammenfassung entspricht;
Identifizieren, unter einer Vielzahl von Referenzlatentraumdarstellungen, von k Referenzlatentraumdarstellungen, die der Ziellatentraumdarstellung am ähnlichsten sind, wobei die Vielzahl von Referenzlatentraumdarstellungen einer Vielzahl von Referenzflusszusammenfassungen und einer Vielzahl von Klassifizierungen entspricht, wobei k eine Ganzzahl größer als 1 ist;
Erzeugen, unter Verwendung eines ersten großen Sprachmodells, LLM, und basierend auf der Zielflusszusammenfassung, eines Zielflussberichts in natürlichsprachlichem Format, und Erzeugen, unter Verwendung des ersten LLM und basierend auf k Referenzflusszusammenfassungen, die jeweils den identifizierten k Referenzlatentraumdarstellungen entsprechen, von k Referenzflussberichten in natürlichsprachlichem Format;
Erzeugen, unter Verwendung eines zweiten LLM und basierend auf dem Zielflussbericht und den k Referenzflussberichten mit ihren entsprechenden Klassifizierungen, einer Klassifizierung des Paketflusses als bösartig oder gutartig.

## Revendications

1. Procédé mis en œuvre par ordinateur comprenant :
la génération (S10), sur la base de données de paquets de réseau d'entrée, d'un résumé de flux cible comprenant des informations relatives à un flux de paquets entre deux adresses pendant une période de temps cible ;
la génération (S20), sur la base du résumé de flux cible, d'une représentation d'espace latent cible correspondant au résumé de flux cible ;
l'identification (S30), parmi une pluralité de représentations d'espace latent de référence, de k représentations d'espace latent de référence les plus similaires à la représentation d'espace latent cible, dans lequel la pluralité de représentations d'espace latent de référence correspond à une pluralité de résumés de flux de référence et à une pluralité de classifications, dans lequel k est un entier supérieur à 1 ;
la génération (S40), au moyen d'un premier grand modèle de langage, LLM, et sur la base du résumé de flux cible, d'un rapport de flux cible au format de langage naturel, et la génération, au moyen du premier LLM et sur la base de k résumés de flux de référence correspondant respectivement aux k représentations d'espace latent de référence identifiées, de k rapports de flux de référence au format de langage naturel ;
la génération (S50), au moyen d'un deuxième LLM et sur la base du rapport de flux cible et des k rapports de flux de référence avec leurs classifications correspondantes, d'une classification du flux de paquets comme malveillant ou bénin.

2. Procédé mis en œuvre par ordinateur selon la revendication 1, dans lequel le résumé de flux cible comprend des informations statistiques concernant des paquets reçus et envoyés dans le flux de paquets.

3. Procédé mis en œuvre par ordinateur selon la revendication 1 ou la revendication 2, dans lequel la génération de la représentation d'espace latent cible comprend la génération, sur la base du résumé de flux cible, d'un vecteur numérique cible et la génération de la représentation d'espace latent cible sur la base du vecteur numérique cible.

4. Procédé mis en œuvre par ordinateur selon la revendication 3, dans lequel la génération du vecteur numérique cible comprend la conversion d'informations contenues dans le résumé de flux cible sous une forme numérique par utilisation d'un encodage à chaud pour des informations catégorielles et par normalisation pour des informations numériques.

5. Procédé mis en œuvre par ordinateur selon la revendication 3 ou la revendication 4, dans lequel la génération de la représentation d'espace latent cible comprend l'utilisation d'un encodeur ayant été entraîné dans un processus d'entraînement d'auto-encodeur comprenant la génération de représentations d'espace latent d'entraînement sur la base de vecteurs numériques d'entraînement.

6. Procédé mis en œuvre par ordinateur selon la revendication 5, comprenant, avant la génération de la représentation d'espace latent cible, la mise en œuvre du processus d'entraînement d'auto-encodeur.

7. Procédé mis en œuvre par ordinateur selon l'une quelconque des revendications précédentes, dans lequel l'identification des k représentations d'espace latent de référence les plus similaires à la représentation d'espace latent cible comprend la détermination d'une distance L2 et/ou d'une similarité cosinus entre la représentation d'espace latent cible et chaque représentation d'espace latent de référence.

8. Procédé mis en œuvre par ordinateur selon l'une quelconque des revendications précédentes, dans lequel la génération de la classification du flux de paquets comme malveillant comprend la génération, par le deuxième LLM, d'une classification du flux de paquets comme l'une parmi une pluralité d'attaques.

9. Procédé mis en œuvre par ordinateur selon l'une quelconque des revendications 1 à 7, comprenant, lorsqu'une classification malveillante est générée pour le flux de paquets, la génération, au moyen d'un troisième LLM, d'une classification du flux de paquets comme l'un parmi une pluralité de types d'attaques, et la génération, au moyen d'au moins un autre LLM en fonction de la classification du type d'attaque, d'une classification du flux de paquets comme l'une parmi une pluralité d'attaques correspondant au type d'attaque.

10. Procédé mis en œuvre par ordinateur selon l'une quelconque des revendications précédentes, comprenant, dans un processus de génération de représentations, la génération de la pluralité de représentations d'espace latent de référence par :
génération, sur la base de données de paquets de réseau de référence, d'une pluralité de résumés de flux de référence, chaque résumé de flux de référence comprenant des informations relatives à un flux de paquets de référence entre deux adresses pendant une période de temps de référence ; et
génération, sur la base des résumés de flux de référence, de la pluralité de représentations d'espace latent de référence.

11. Procédé mis en œuvre par ordinateur selon la revendication 10, dans lequel la génération des représentations d'espace latent de référence comprend la génération, sur la base des résumés de flux de référence, de vecteurs numériques de référence et la génération des représentations d'espace latent de référence sur la base des vecteurs numériques de référence.

12. Procédé mis en œuvre par ordinateur selon la revendication 11, comprenant la génération d'autres vecteurs numériques de référence par calcul de la moyenne de pluralités respectives des vecteurs numériques de référence, et dans lequel la génération des représentations d'espace latent de référence comprend en outre la génération de représentations d'espace latent de référence sur la base des autres vecteurs numériques de référence.

13. Procédé mis en œuvre par ordinateur selon l'une quelconque des revendications précédentes, comprenant, lorsqu'un flux de paquets est identifié comme malveillant, l'instruction donnée à au moins une entité associée aux deux adresses d'exécuter une action en réponse au flux de paquets malveillant.

14. Programme informatique qui, lorsqu'il est exécuté sur un ordinateur, amène l'ordinateur à réaliser un procédé comprenant :
la génération, sur la base de données de paquets de réseau d'entrée, d'un résumé de flux cible comprenant des informations relatives à un flux de paquets entre deux adresses pendant une période de temps cible ;
la génération, sur la base du résumé de flux cible, d'une représentation d'espace latent cible correspondant au résumé de flux cible ;
l'identification, parmi une pluralité de représentations d'espace latent de référence, de k représentations d'espace latent de référence les plus similaires à la représentation d'espace latent cible, dans lequel la pluralité de représentations d'espace latent de référence correspond à une pluralité de résumés de flux de référence et à une pluralité de classifications, dans lequel k est un entier supérieur à 1 ;
la génération, au moyen d'un premier grand modèle de langage, LLM, et sur la base du résumé de flux cible, d'un rapport de flux cible au format de langage naturel, et la génération, au moyen du premier LLM et sur la base de k résumés de flux de référence correspondant respectivement aux k représentations d'espace latent de référence identifiées, de k rapports de flux de référence au format de langage naturel ;
la génération, au moyen d'un deuxième LLM et sur la base du rapport de flux cible et des k rapports de flux de référence avec leurs classifications correspondantes, d'une classification du flux de paquets comme malveillant ou bénin.

15. Appareil de traitement d'informations comprenant une mémoire et un processeur connecté à la mémoire, dans lequel le processeur est configuré pour :
générer, sur la base de données de paquets de réseau d'entrée, un résumé de flux cible comprenant des informations relatives à un flux de paquets entre deux adresses pendant une période de temps cible ;
générer, sur la base du résumé de flux cible, une représentation d'espace latent cible correspondant au résumé de flux cible ;
identifier, parmi une pluralité de représentations d'espace latent de référence, k représentations d'espace latent de référence les plus similaires à la représentation d'espace latent cible, dans lequel la pluralité de représentations d'espace latent de référence correspond à une pluralité de résumés de flux de référence et à une pluralité de classifications, dans lequel k est un entier supérieur à 1 ;
générer, au moyen d'un premier grand modèle de langage, LLM, et sur la base du résumé de flux cible, un rapport de flux cible au format de langage naturel, et générer, au moyen du premier LLM et sur la base de k résumés de flux de référence correspondant respectivement aux k représentations d'espace latent de référence identifiées, k rapports de flux de référence au format de langage naturel ;
générer, au moyen d'un deuxième LLM et sur la base du rapport de flux cible et des k rapports de flux de référence avec leurs classifications correspondantes, une classification du flux de paquets comme malveillant ou bénin.
